# EUROPÄISCHE PATENTSCHRIFT

(11) **EP 0 972 696 B1**
(45) Veröffentlichungstag und Bekanntmachung des Hinweises auf die Patenterteilung: **04.08.2004**
(21) Anmeldenummer: 99111004.0
(22) Anmeldetag: 10.06.1999
(51) Int. Cl.: B62D 33/067

(54) **Vordere Lagerung des kippbaren Fahrerhauses eines Lastkraftwagens**
Front bearing for tilt cab truck
Palier avant pour la cabine basculante d'un camion

(30) Priorität: 13.07.1998 DE 19831367
(43) Veröffentlichungstag der Anmeldung: 19.01.2000
(73) Patentinhaber: MAN Nutzfahrzeuge Aktiengesellschaft, 80976 München (DE)
(72) Erfinder: Kienast, Frank, Dipl.-Ing., 85726 Pfaffenhofen/Ilm (DE); Wunderlich, Walter, Dipl.-Ing., 4441 Behamberg (AT); Wührleitner, Gerhard, Dipl.-Ing., 4400 Steyr (AT)

(56) Entgegenhaltungen:
- EP-A- 0 621 170
- EP-A- 0 908 376
- DE-A- 3 730 338
- DE-A- 19 612 502
- DE-A- 19 637 920
- PATENT ABSTRACTS OF JAPAN vol. 1999, no. 03, 31. März 1999 (1999-03-31) & JP 10 316013 A (HINO MOTORS LTD), 2. Dezember 1998 (1998-12-02)

## Beschreibung

Die Erfindung betrifft eine vordere Lagerung des kippbaren Fahrerhauses eines Lastkraftwagens.

Zum Stand der Technik wird auf die DE 196 12 502 A1 und die DE 44 13 414 A1 verwiesen.

Die DE 19 612 502 A offenbart eine vordere Lagerung des kippbaren Fahrerhauses eines Lastkraftwagens, umfassend folgende Bauteile, nämlich
a) zwei Feder-Dämpfer-Beine,
b) eine Stabilisatorschwinge, bestehend aus einem rechten und linken Längsarm, einer diese vorne miteinander verbindenden Querstange,
c) zwei hintere Lagerböcke,
d) zwei Feder-Dämpfer-Bein-Halter und
e) zwei vordere Anschlußkonsolen,
welche Bauteile wie folgt angeordnet und miteinander sowie mit dem Fahrerhaus (5) verbunden sind, nämlich
i) die Stabilisatorschwinge ist hinten über dort am Ende ihrer Längsarme angeordnete Lageraugen mit eingebauten Lagern und eine Lagerachse bzw. -schraube an den beiden hinteren Lagerböcken quer- und längsgeführt sowie schwenkbar gelagert,
j) das Fahrerhaus ist mit seinem Boden an den beiden Anschlußkonsolen befestigt und über die Anschlußkonsolen (13, 14) sowie die Querstange und die Feder-Dämpfer-Beine gegenüber dem Fahrgestell-Rahmen abgefedert, und
k) das Fahrerhaus (5) ist über die Anschlußkonsolen durch deren Lagerteile quergeführt und kippbar am vorderen Ende der Querstange angelenkt.

Bei der Fahrerhaus-Lagerung gemäß der DE 44 13 414 A1 ist das kippbare Fahrerhaus vorne ebenfalls mittels zweier Feder-Dämpfer-Beine gegenüber dem Fahrgestell-Rahmen abgefedert, von denen jedes unten an einem rahmenfesten Lagerbock und oben an einem einstückigen, U-förmigen Stabilisatorlenker angelenkt ist. Dieser Stabilisatorlenker besteht aus einem linken und rechten Federblattlenker, die vorne durch eine Querstrebe miteinander verbunden sind und von denen jeder hinten fest an einem Fahrgestell-Rahmen befestigt ist. Das Fahrerhaus selbst ist über zwei Konsolen am U-förmigen Stabilisatorlenker angelenkt, und zwar jeweils in einem Lagerbock, der oben am Stabilisatorlenker am Übergangsbereich zwischen einem Federblattlenker und der Querstrebe befestigt ist. Ersichtlicherweise ist diese Fahrerhaus-Lagerung in Fahrzeuglängsrichtung gesehen relativ unnachgiebig, was den Ansprüchen moderner Fahrerhaus-Lagerungen nicht mehr gerecht wird.

Es ist demgegenüber Aufgabe der Erfindung, eine vordere Lagerung für das kippbare Fahrerhaus eines Lastkraftwagens zu schaffen, die im Frontalcrashfall mit einem Hindernis oder einem anderen Fahrzeug einen energieverzehrenden Längsversatz des Fahrerhauses gegenüber dem Fahrgestell-Rahmen ermöglicht und im übrigen kostengünstig herstellbar und montierbar ist.

Diese Aufgabe ist erfindungsgemäß durch die im Anspruch 1 beanspruchte vordere Fahrerhaus-Lagerung gelöst.

Vorteilhafte Ausgestaltungen und Weiterbildungen dieser Lösung sind in den Unteransprüchen gekennzeichnet.

Die Vorteile der erfindungsgemäßen Lösung sind weiter hinten in Verbindung mit der nachfolgenden Beschreibung zweier Ausführungsbeispiele der Erfindung anhand der Zeichnung erläutert. In der Zeichnung zeigen:

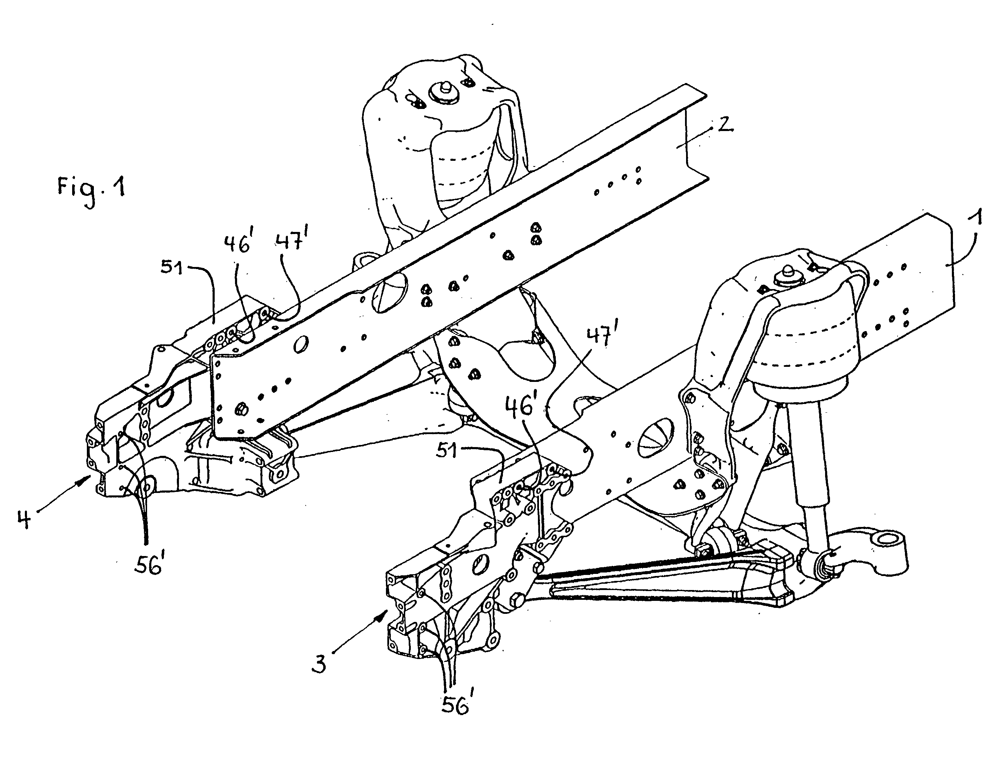

- Fig. 1: das vordere Ende eines Lastkraftwagen-Fahrgestells,
- Fig. 2: eine erste Ausführungsform der vorderen Lagerung für ein kippbares Fahrerhaus großer/hoher Bauart in Vorderansicht,
- Fig. 3: die Ausführungsform gemäß Fig. 2 in Seitenansicht von links,
- Fig. 4: die Ausführungsform gemäß Fig. 2 in Seitenansicht mit gekipptem Fahrerhaus,
- Fig. 5: die Ausführungsform der vorderen Lagerung gemäß Fig. 2 in vorderansichtiger Alleindarstellung ihrer linksseitigen Teile,
- Fig. 6: die Ausführungsform der vorderen Lagerung gemäß Fig. 2 in perspektivisch von schräg vorn gesehener Alleindarstellung ihrer linksseitigen Teile,
- Fig. 7: die Ausführungsform der vorderen Lagerung gemäß Fig. 2 in draufsichtiger Alleindarstellung ihrer linksseitigen Teile,
- Fig. 8: eine zweite Ausführungsform der vorderen Lagerung für ein kippbares Fahrerhaus normalhoher Bauart in Vorderansicht,
- Fig. 9: die Ausführungsform gemäß Fig. 8 in Seitenansicht von links,
- Fig. 10: die Ausführungsform der vorderen Lagerung gemäß Fig. 8 in perspektivisch von schräg vorn gesehener Alleindarstellung ihrer linksseitigen Teile,

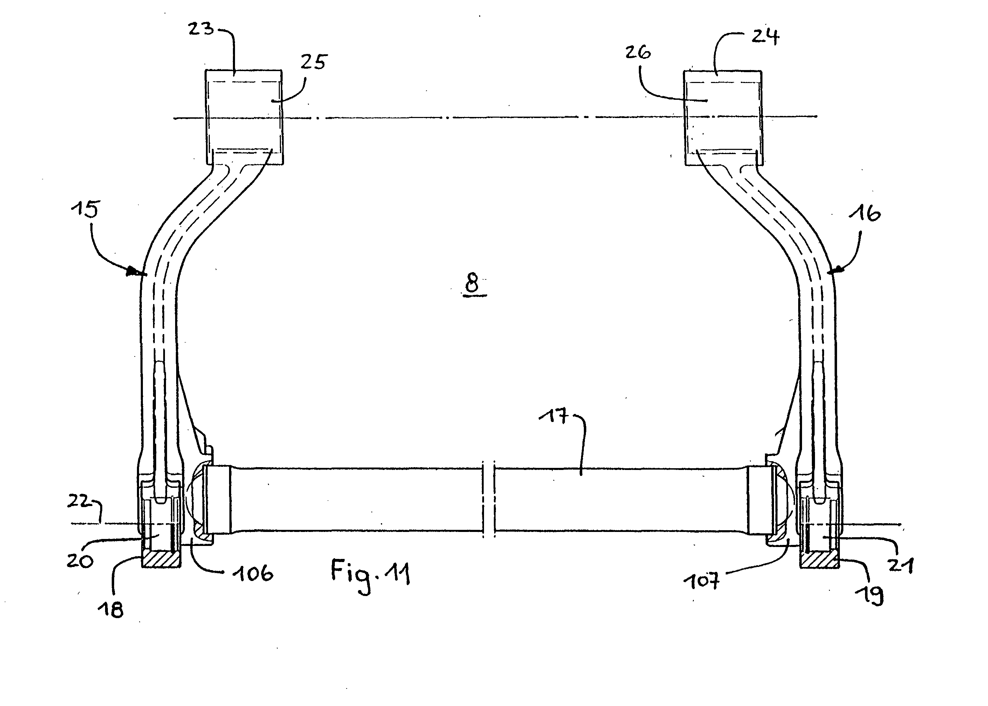

- Fig. 11: eine Ausführungsform einer U-förmigen Stabilisatorschwinge als Teil der vorderen Fahrerhaus-Lagerung in Draufsicht,
- Fig. 12: die Stabilisatorschwinge aus Fig. 11 in Seitenansicht von links,

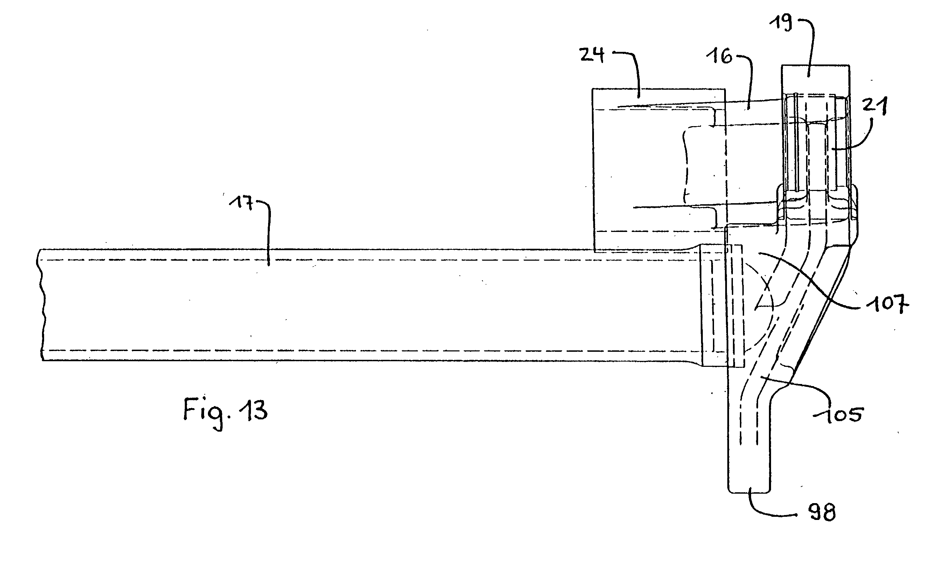

- Fig. 13: den linken Abschnitt der Stabilisatorschwinge aus Fig. 11 in Vorderansicht,

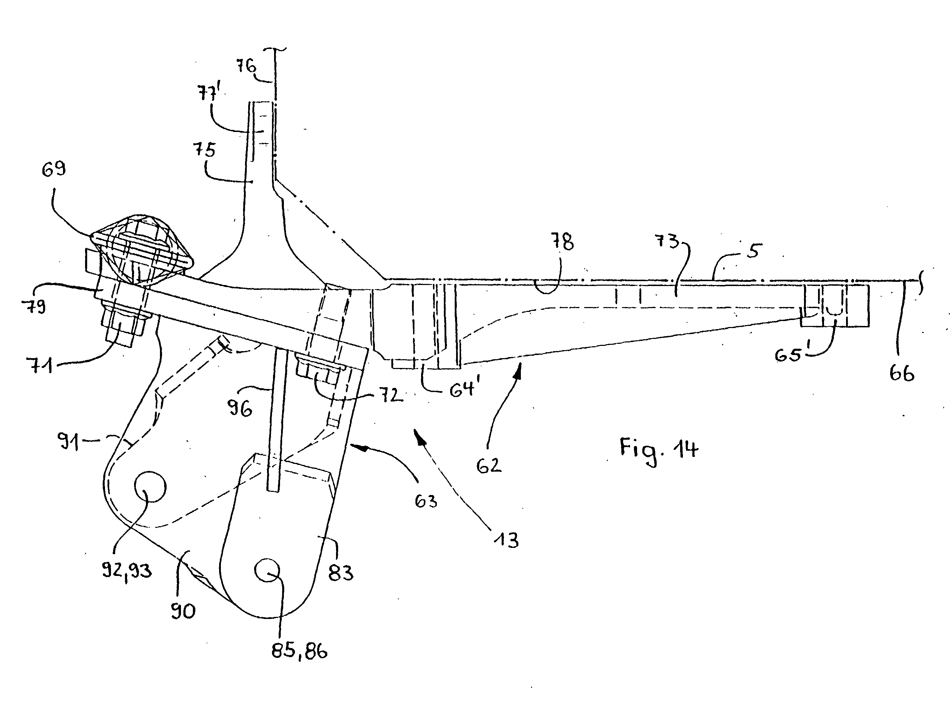

- Fig. 14: eine Ausführungsform einer Anschlußkonsole als Teil der vorderen Fahrerhaus-Lagerung in Seitenansicht,

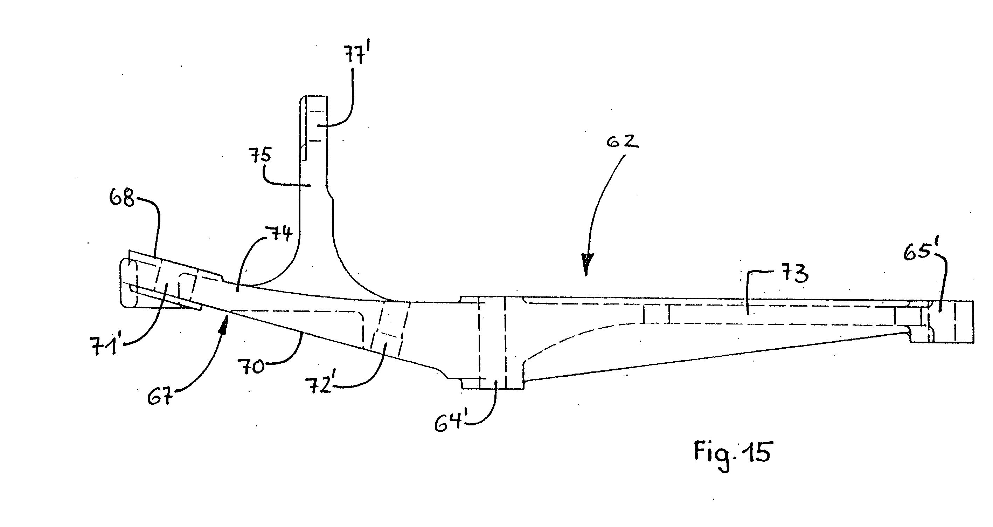

- Fig. 15: das obere Teil der Anschlußkonsole aus Fig. 14 in seitenansichtiger Alleindarstellung,

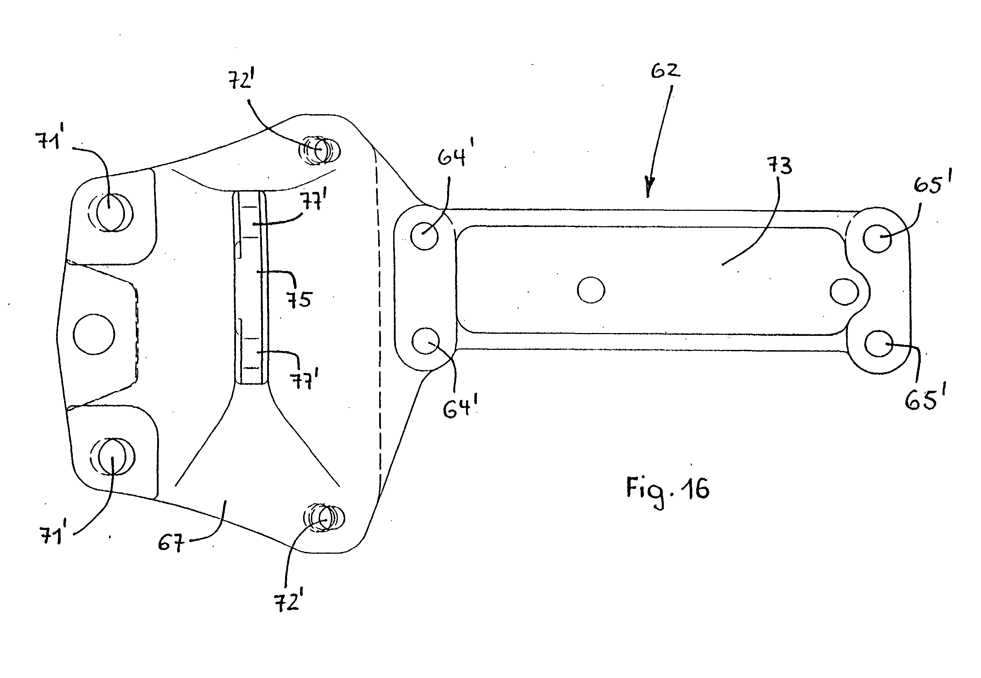

- Fig. 16: das obere Teil der Anschlußkonsole aus Fig. 14 in draufsichtiger Alleindarstellung,

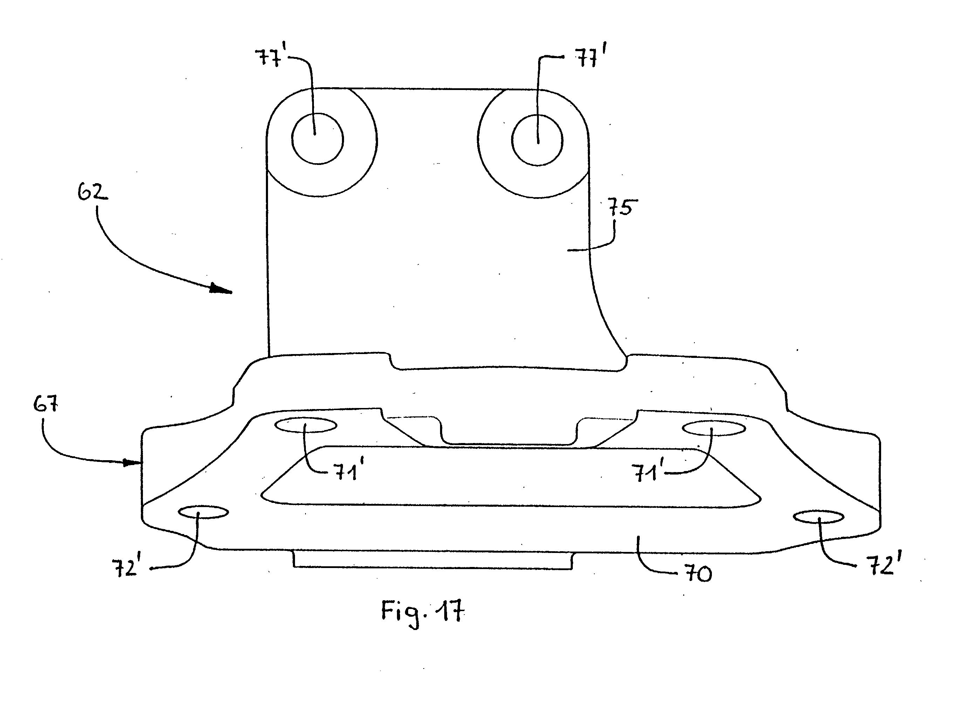

- Fig. 17: das obere Teil der Anschlußkonsole aus Fig. 14 in vorderansichtiger Alleindarstellung,

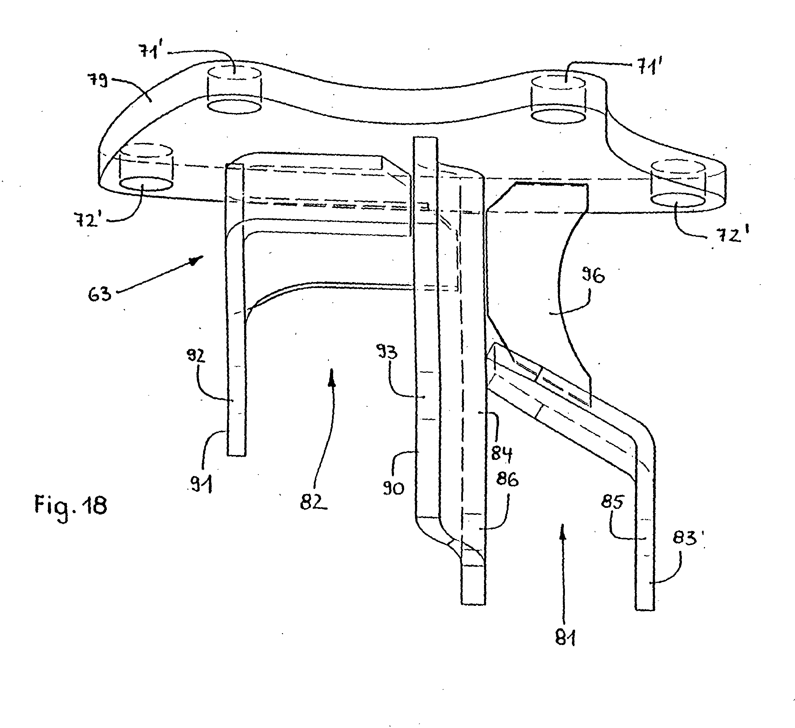

- Fig. 18: das untere Teil der Anschlußkonsole aus Fig. 14 in vorderansichtiger Alleindarstellung,

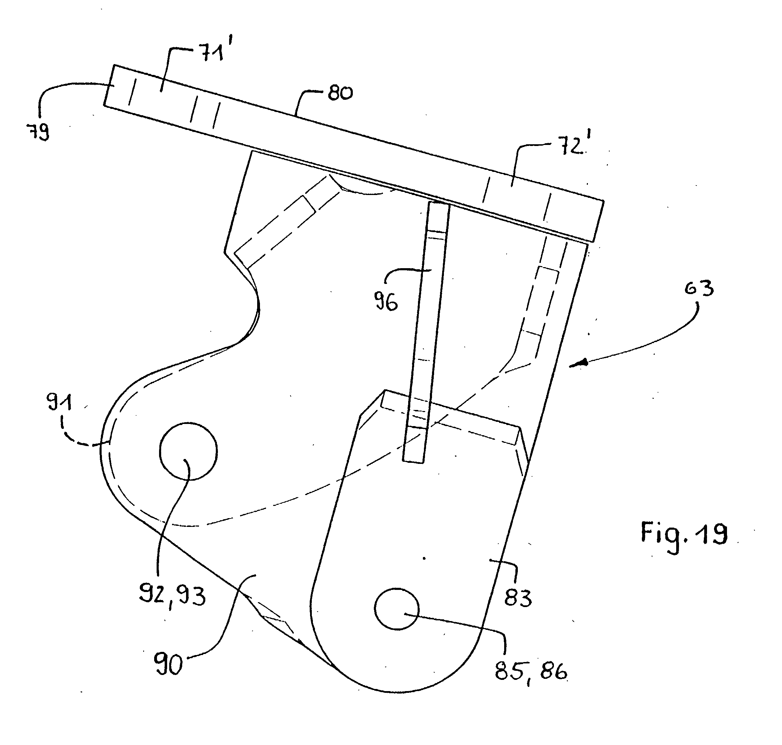

- Fig. 19: das untere Teil der Anschlußkonsole aus Fig. 14 in seitenansichtiger Alleindarstellung,

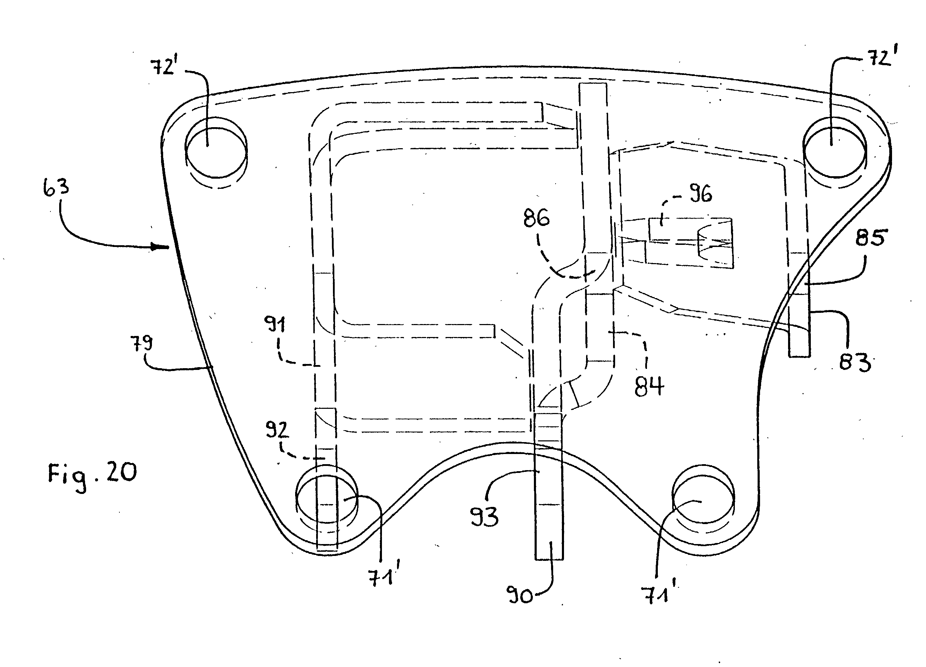

- Fig. 20: das untere Teil der Anschlußkonsole aus Fig. 14 in draufsichtiger Alleindarstellung,

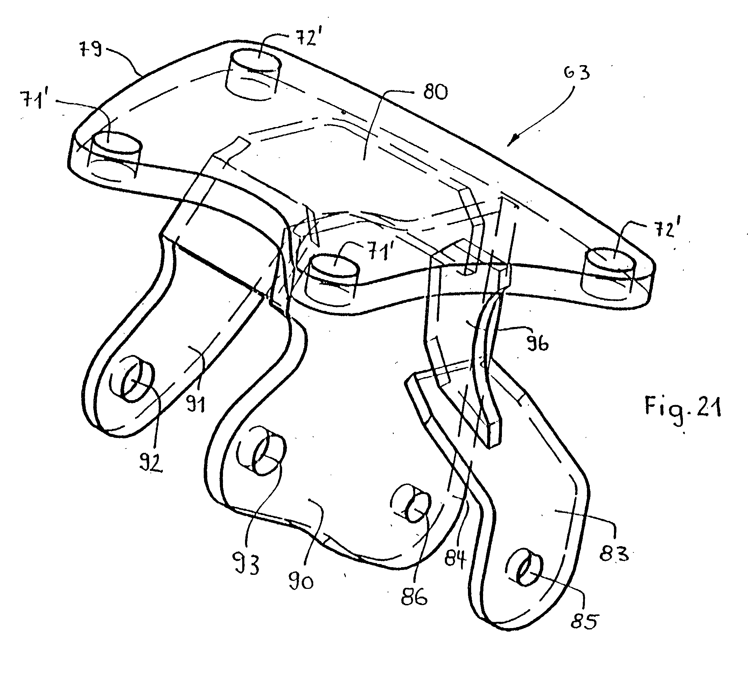

- Fig. 21: das untere Teil der Anschlußkonsole aus Fig. 14 in perspektivischer Ansicht von schräg vorne,
- Fig. 22: das Hauptteil eines hinteren Lagerbockes aus der Ausführungsform gemäß Fig. 2 bis 7 in Seitenansicht,
- Fig. 23: das Hauptteil eines hinteren Lagerbockes aus der Ausführungsform gemäß Fig. 2 bis 7 in Draufsicht,
- Fig. 24: das Hauptteil eines hinteren Lagerbockes aus der Ausführungsform gemäß Fig. 8 bis 10 in Seitenansicht,
- Fig. 25: das Hauptteil eines hinteren Lagerbockes aus der Ausführungsform gemäß Fig. 8 bis 10 in Draufsicht.

In den einzelnen Figuren sind gleiche beziehungsweise einander entsprechende Teile mit gleichem Bezugszeichen angezogen.

Von dem Lastkraftwagen sind als Teile von dessen Fahrgestell-Rahmen die beiden Rahmen-Längsträger mit 1 und 2 bezeichnet. Am vorderen Ende jedes derselben ist ein Multifunktionslagerschild 3, 4 befestigt. Diese vorderen Multifunktionslagerschilde 3, 4 dienen zur Aufnahme einer Vielzahl von Fahrzeugteilen, so auch solchen, die der vorderen Lagerung des Fahrerhauses 5 zuzurechnen sind.

Die vordere Fahrerhaus-Lagerung umfaßt folgende Bauteile, nämlich zwei Feder-Dämpfer-Beine 6, 7, eine von oben gesehen U-förmige Stabilisatorschwinge 8, zwei hintere Lagerböcke 9, 10, zwei Feder-Dämpfer-Bein-Halter 11, 12 und zwei vordere Anschlußkonsolen 13, 14. Die linksseitigen Bauteile der Fahrerhaus-Lagerung sind bezogen auf die Fahrzeuglängsachse spiegelsymmetrisch zu den rechtsseitigen Bauteilen ausgebildet und angeordnet.

Die U-förmige Stabilisatorschwinge 8 besteht aus einem rechten Längsarm 15, einem linken Längsarm 16, einer diese vorne miteinander verbindenden Querstange 17 und zwei, jeweils oberhalb des Übergangsbereiches zwischen Querstange 17 und einem Längsarm 15, 16 angeordneten Lageraugen 18, 19. In diese Lageraugen 18, 19 sind Lager 20, 21 eingebaut, deren Rotationsachsen in einer horizontalen Querlinie 22 zueinander fluchten. Außerdem ist am hinteren Ende jedes der beiden Längsarme 15, 16 der Stabilisatorschwinge 8 ebenfalls ein Lagerauge 23, 24 mit eingebautem Lager 25, 26 vorgesehen, deren Rotationsachsen ebenfalls in einer horizontalen Querlinie 27 zueinander fluchten, welche parallel zur Querlinie 22 verläuft.

Die U-förmige Stabilisatorschwinge 8 kann entweder als einstückiges Gesenkschmiede- oder Stahlgußteil realisiert oder alternativ hierzu aus drei vorgefertigten Einzelteilen zusammengesetzt sein. In letzterem Fall können die beiden Längsarme 15, 16 einschließlich aller Lageraugen und anderer Teile jeweils entweder durch ein Gesenkschmiede- oder Stahlgußteil und die Querstange 17 entweder durch ein Rohr oder ebenfalls ein vollmaterialiges Gesenkschmiedeteil gebildet sein. Nach entsprechender spanabhebender Nachbehandlung werden diese drei Teile dann miteinander verschweißt.

Die Längsarme 15, 16 der Stabilisatorschwinge 8 sind so geformt und angeordnet, daß sie bei einem Frontalcrashvorgang des Lastkraftwagen in Längsrichtung gezielt deformierbar sind und gleichzeitig eine energieabsorbierende Wirkung entfalten. Hierzu sind die Längsarme 15, 16 der Stabilisatorschwinge 8 zwischen vorderem und hinterem Ende - von der Seite betrachtet - leicht nach oben durchgebogen und - von oben betrachtet - ungerade, beispielsweise S-förmig oder Z-förmig ausgebildet, was bei einem Frontalcrashvorgang definiert verformbare Falt-, Biege- oder Knickzonen bedeutet. Vorzugsweise sind die beiden Längsarme 15, 16 innerhalb der U-förmigen Stabilisatorschwinge 8 gepfeilt zueinander in dem Sinne angeordnet, daß deren hintere Enden 23, 24 weniger weit voneinander beabstandet sind als deren vordere Enden 18, 19.

Die U-förmige Stabilisatorschwinge 8 ist über die hinten an den Längsarmen 15, 16 angeordneten Lageraugen 23, 24 und die darin eingebauten Lager 25, 26 längsund quergeführt sowie um die Rotationsachse - Linie 27 - schwenkbar an den beiden Lagerböcken 9, 10 angelenkt. Jeder derselben ist hinten oben an einem der beiden Multifunktionslagerschilde 3, 4 lösbar befestigt, und zwar an seinem unteren Endbereich 28 durch zwei Schraubverbindungen 29, 30, wovon die eine (29) ganz vorne und die andere (30) ganz hinten angeordnet ist. Außerdem weist jeder hintere Lagerbock 9, 10 oberhalb dieser Befestigungszone 28, aber unterhalb der Anschlußebene für die Stabilisatorschwinge 8 eine im Frontalcrashfall des Lastkraftwagen definiert verformbare Falt- oder Knickzone auf, die durch konstruktive Maßnahmen wie Querschnittsreduzierungen, Materialschwächungen, Einbuchtungen, Einschnürungen oder dergleichen realisiert sein kann.

Im dargestellten Beispiel ist jeder Lagerbock 9, 10 aus zwei Teilen zusammengesetzt, einem definiert verformbaren Hauptteil 31 und einem vorne an diesem angeflanscht mittels Verschraubungen 32 befestigten Anschlußteil 33, an dem ein Längsarm 15 bzw. 16 der Stabilisatorschwinge 8 über das hintenendig gegebene Lagerauge und das darin eingebaute Lager quergeführt sowie über eine querdurchgehende Lagerachse bzw. -schraube 40 längsgeführt und schwenkbar angelenkt ist.

Sowohl das Hauptteil 31 als auch das Anschlußteil 33 eines Lagerbockes 9, 10 ist vorzugsweise durch jeweils ein Blechbiegeteil realisiert.

Bei Ausführung als Blechbiegeteil ist das Anschlußteil 33 jedes Lagerbockes 9, 10 in Draufsicht gesehen U-förmig gebogen und weist im einzelnen hinten eine ebene Anschlußplatte 34 mit mehreren Schraubendurchführungslöchern 35 sowie beidseitig an der Anschlußplatte 34 senkrecht nach vorn und parallel zueinander angeordnet abgewinkelte Seitenwangen 36, 37 mit zueinander fluchtenden Bohrungen 38, 39 für Hindurchführung einer Lagerachse bzw. Lagerschraube 40 auf.

Das Hauptteil 31 eines Lagerbockes 9,10 weist bei Ausführung als Blechbiegeteil eine ebene und leicht nach hinten geneigte vordere Anschlußplatte 41 mit mehreren Schraubendurchführungslöchern 42 für das vorderseitige Anflanschen und Befestigen des Anschlußteiles 33 mittels einer entsprechenden Anzahl von Schraubverbindungen 43 auf. An der vorderen Anschlußplatte 41 schließen sich beiderseits jeweils nach hinten abgewinkelte, parallel zueinander verlaufend angeordnete Seitenwangen 44, 45 an, in deren unterem Bereich Schraubendurchführungslöcher 46, 47 für die beiden Schraubverbindungen 29, 30 ausgebildet sind. Die zugehörigen Schraubendurchführungslöcher im jeweiligen Multifunktionslagerschild sind mit 46' und 47' bezeichnet.

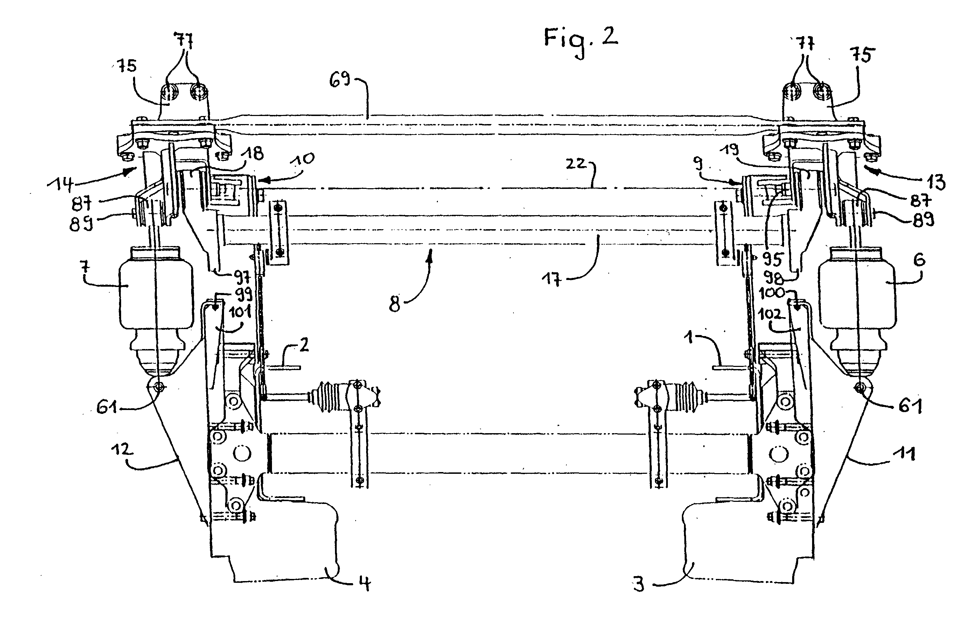

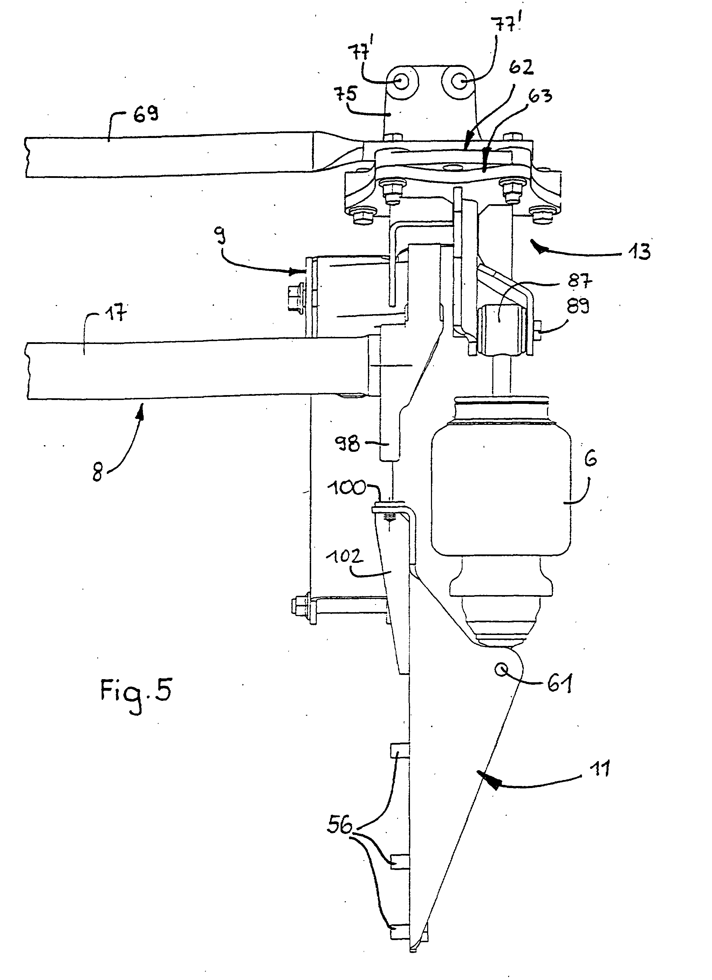

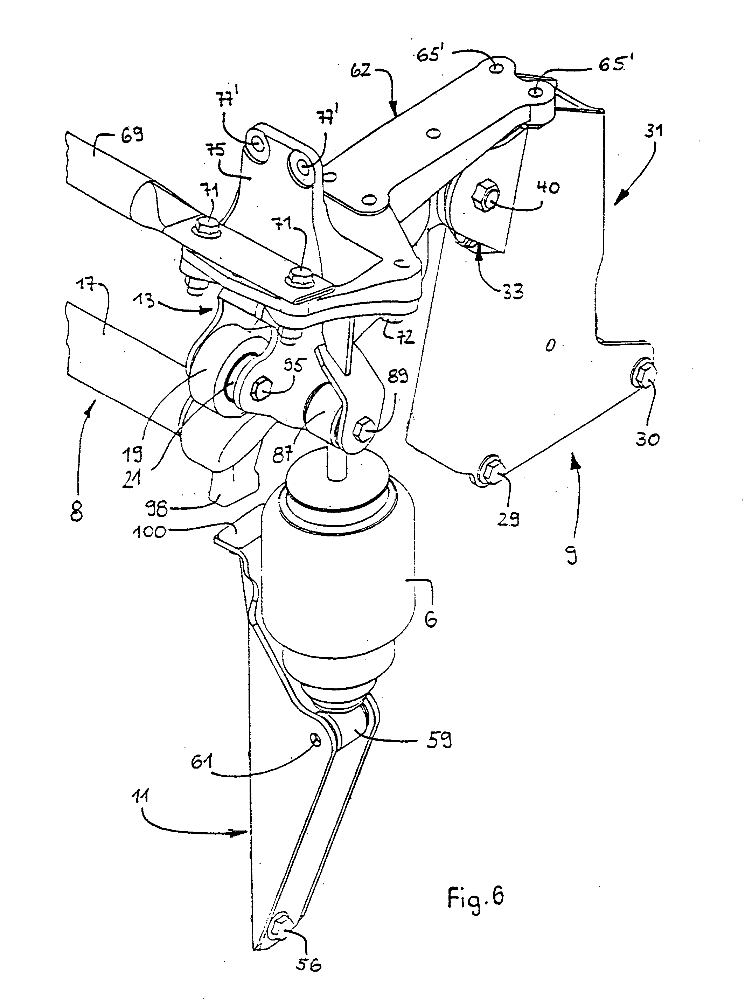

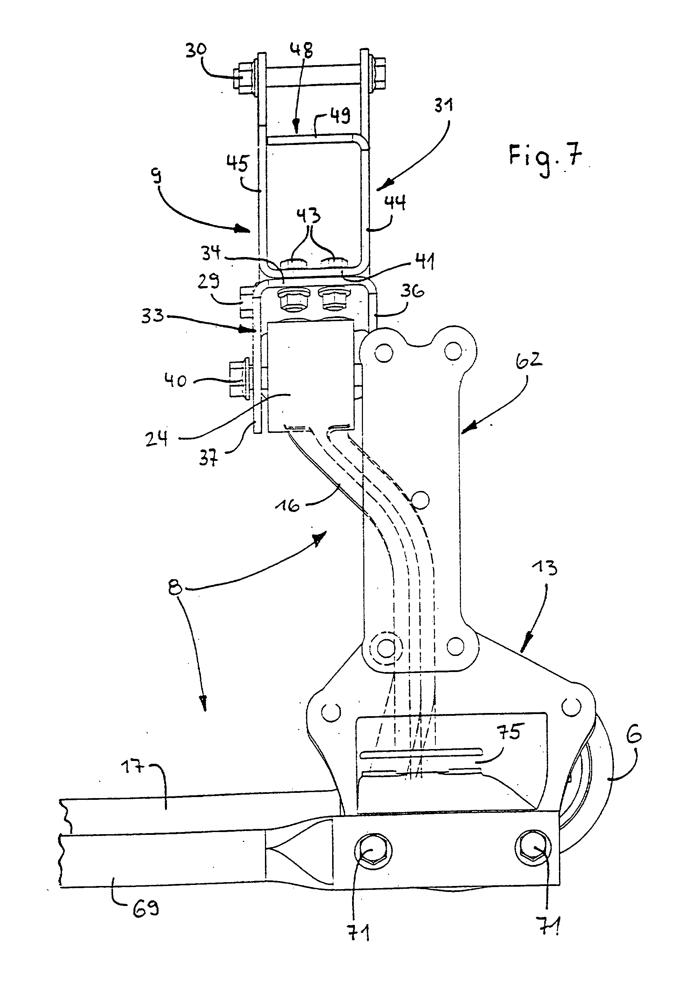

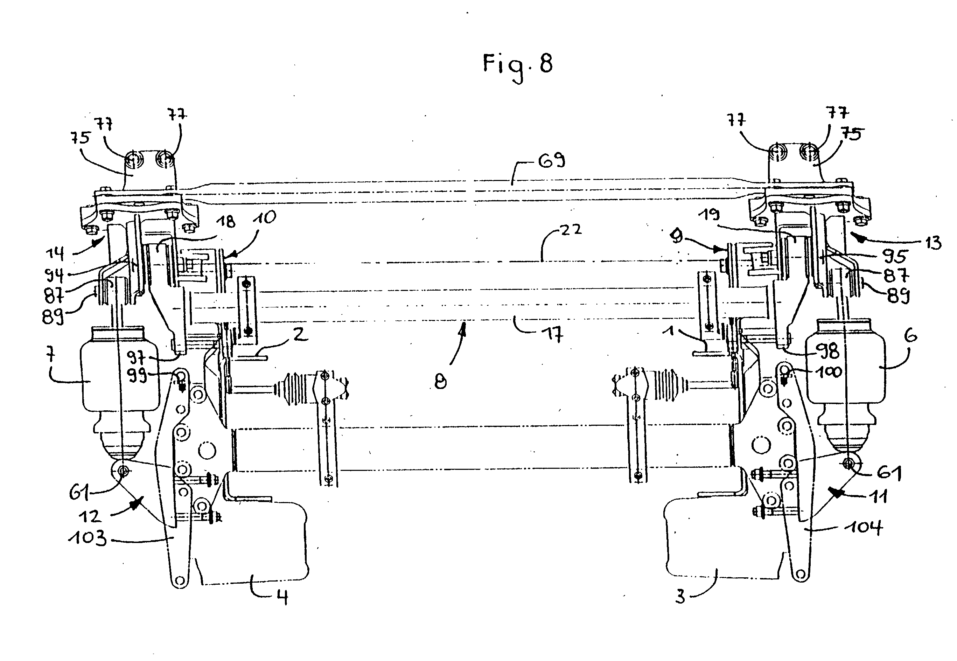

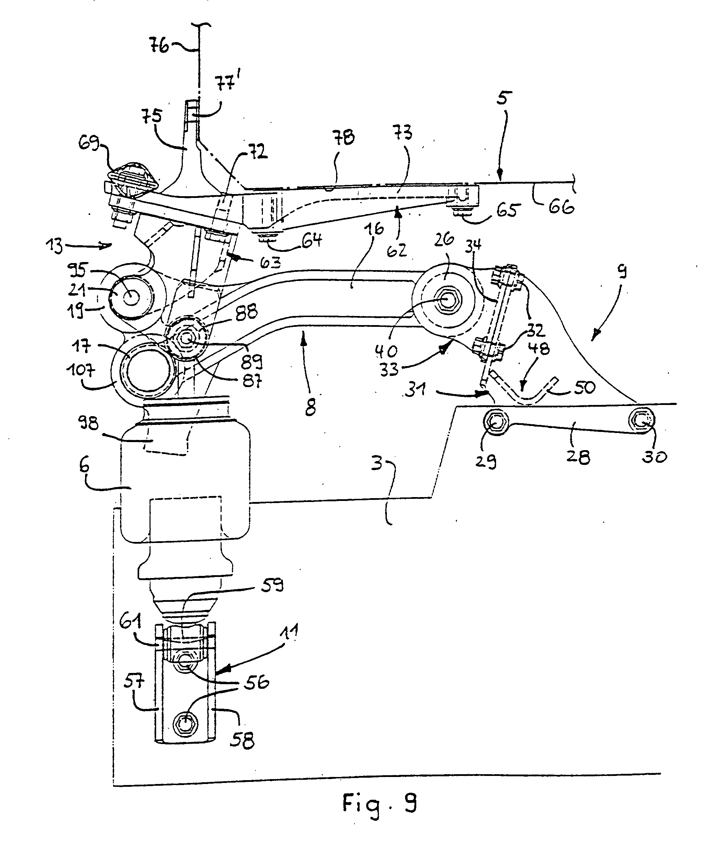

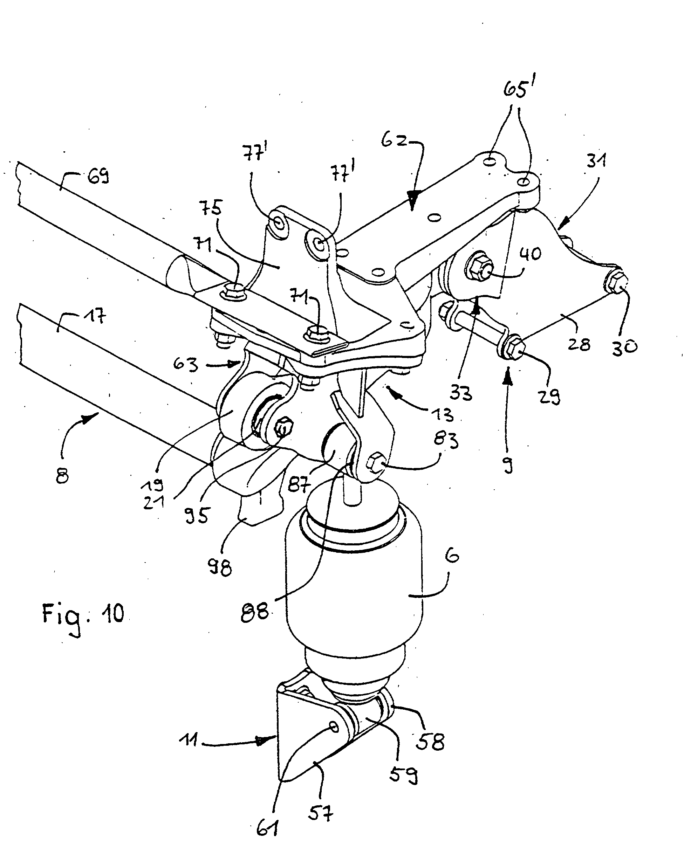

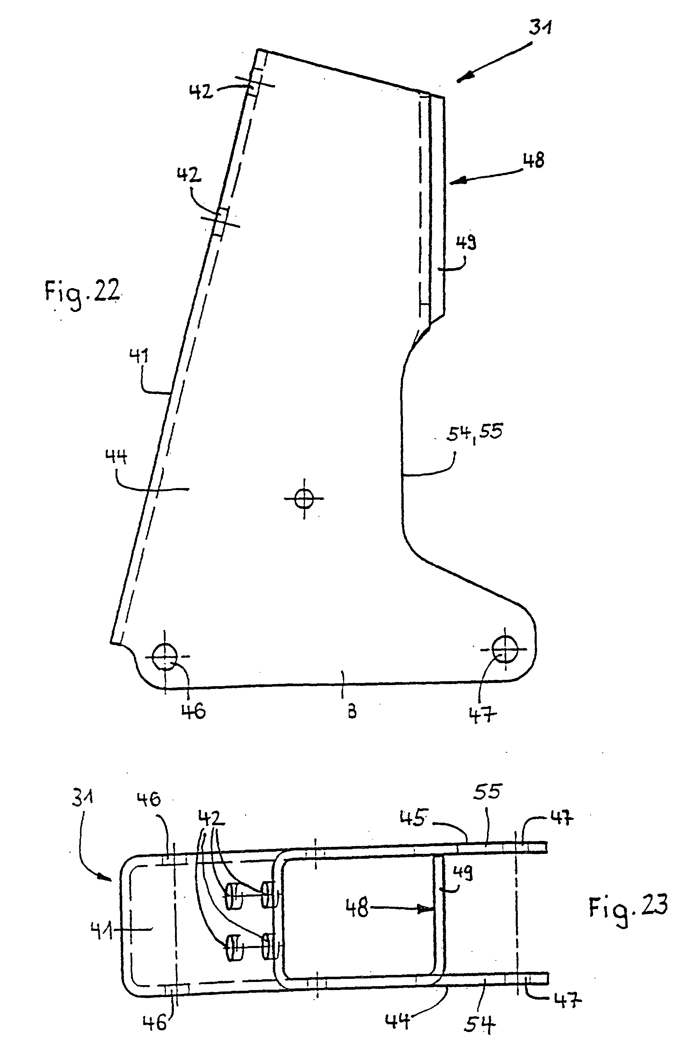

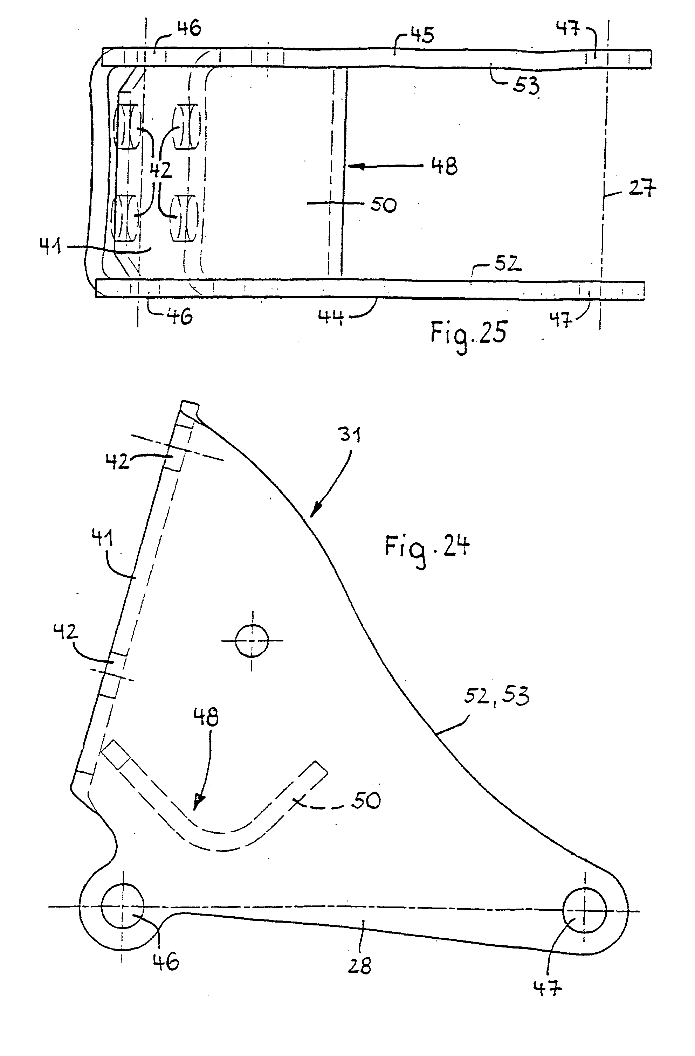

Darüber hinaus sind die beiden Seitenwangen 44, 45 des Hauptteils 31 eines Lagerbocks 9, 10 durch eine deren Abstand sicherstellende, nicht in der Deformationszone angeordnete Quertraverse 48 miteinander verbunden. Im Beispiel gemäß Figuren 2 bis 7 und 22, 23 ist die Quertraverse 48 durch eine hintenendig an einer Seitenwange 44 oder 45 zur gegenüberliegenden Seitenwange 45 bzw. 44 hin abgewinkelte und sich an dieser abstützend angeschweißten Querwange 49 gebildet. Im Beispiel gemäß den Figuren 8 bis 10 und 24, 25 ist die Quertraverse 48 dagegen im vorderen Bereich des Hauptteils 31 eines jeden Lagerbockes 9, 10, aber räumlich hinter der vorderen Schraubverbindung 29 angeordnet und beispielsweise durch ein Winkelprofilstück 50 (wie dargestellt), einen Bolzen oder ein Rohrstück realisiert, das zwischen den beiden Seitenwangen 44, 45 sich erstreckend mit diesen verschweißt ist. In diesem Fall dient die Quertraverse 50 als Anschlag, der im Frontalcrashfall des Lastkraftwagen bei Deformation des hinteren Lagerbockes 9, 10 rotatorisch um die vordere Schraubverbindung 29 auf der Oberseite 51 des den Lagerbock 9 bzw. 10 aufnehmenden Multifunktionslagerschildes 3 bzw. 4 wegbegrenzend zur Anlage kommt.

Es besteht außerdem die Möglichkeit, den Abstand der vorderen Schraubendurchführungslöcher 46 zur Peripherie des Lagerbockes 9, 10 so zu bemessen und/oder die vordere Schraubverbindung 29, mit der ein Lagerbock 9 bzw. 10 am Multifunktionslagerschild 3 bzw. 4 befestigt ist, auf eine solche Grenzbelastung auszulegen, daß dann, wenn im Frontalcrashfall der während der Deformation mit seiner anschlagbildenden Quertraverse 50 an der Multifunktionslagerschild-Oberseite 51 zur Anlage gekommene und maximal bzw. weitestgehend deformierte Lagerbock 9 bzw. 10 weiterhin einer nach hinten gerichteten Horizontalkraft ausgesetzt ist, die vordere Verbindung sich auflöst, dabei der Lagerbock 9, 10 zur Peripherie hin ausreißt und/oder die vordere Schraubverbindung 29 abreißt und der Lagerbock 9 bzw. 10 sich dann rotatorisch um die hintere Schraubverbindung 30 nach hinten bis zum kompletten Überschlag verschwenken kann.

Die Verformung des Lagerbockes 9 bzw. 10 im Frontalcrashfall wird - wie bereits weiter vorne angedeutet - durch konstruktive Maßnahmen bewirkt. Im Beispiel gemäß Figuren 8 bis 10 und 24, 25 weist hierzu der Lagerbock 9 bzw. 10 auf der Rückseite seines Hauptteil 31 hintere Einbuchtungen 52, 53 an seinen Seitenwangen 44, 45 auf. Im Beispiel gemäß Figuren 2 bis 7 und 22, 23 weist der Lagerbock 9, 10 auf der Rückseite seines Hauptteils 31 unterhalb der Querwange 49 an seinen Seitenwangen 44, 45 hintere Einbuchtungen 54, 55 auf. Im Bereich der den Querschnitt in Längsrichtung gesehen reduzierenden Einbuchtungen 52, 53 bzw. 54, 55 knickt der Lagerbock 9, 10 im Frontalcrashfall bei von vorn wirkender Kraft, die oben über die Stabilisatorschwinge 8 her eingeleitet wird, ein.

Das Fahrerhaus 5 ist mit seinem Boden 66 vorne auf den beiden Anschlußkonsolen 13, 14 befestigt, mit diesen an den beiden Feder-Dämpfer-Beinen 6, 7 angelenkt und über diese gegenüber dem Fahrgestell-Rahmen 1, 2 abgefedert. Für die Abstützung der Feder-Dämpfer-Beine 6, 7 am Fahrgestell-Rahmen sind die beiden Feder-Dämpfer-Bein-Halter 11, 12 vorgesehen. Jeder derselben ist seitlich außen in gleicher Höhenlage an einem Multifunktionslagerschild 3 bzw. 4 lösbar mittels Schraubenlöcher 56' durchsetzender Schraubverbindungen 56 befestigt und nimmt zwischen zwei Seitenwangen 57, 58 quergeführt sowie schwenkbar das am unteren Ende eines Feder-Dämpfer-Beines 6 bzw. 7 angeordnete Lagerauge 59 mit eingebauten Lager 60 auf. Eine in Fahrzeuglängsrichtung quer durchgehende Lagerachse 61 stellt die Verbindung zwischen Lager 60 und Feder-Dämpfer-Bein-Halter 11 bzw. 12 her und bildet die Schwenkachse für das solchermaßen angelenkte Feder-Dämpfer-Bein 6 bzw. 7. Das obere Ende eines jeden Feder-Dämpfer-Beines 6, 7 ist in einer Anschlußkonsole 13 bzw. 14 gefaßt.

Jede der beiden Anschlußkonsolen 13, 14 ist aus zwei Teilen zusammengesetzt, nämlich einem oberen Tragteil 62, auf dem das Fahrerhaus 5 befestigt ist, und einem unteren Lagerteil 63, an dem ein Feder-Dämpfer-Bein 6 bzw. 7 und an anderer Stelle die Stabilisatorschwinge 8 mit einem der beiden an ihr angeordneten Lageraugen 18, 19 mit eingebauten Lagern 20, 21 angelenkt sind.

Das obere Tragteil 62 jeder Anschlußkonsole 13, 14 ist durch eine großflächige Platte gebildet, die mit ihrem hinteren Abschnitt 73 über mehrere Vertikalverschraubungen 64, 65 am Fahrerhaus-Boden 66 befestigt ist und mit einem vorderen Abschnitt 74 den Fahrerhaus-Boden 66 vorne um ein gewisses Maß überragt und eine schräge Stützrampe 67 bildet. An der freien Oberseite 68 der Stützrampe 67 bzw. des vorderen Abschnitts 74 ist eine die Lage der beiden Anschlußkonsolen 13, 14 stabilisierende Querstange 69 und an der schräg nach vorn oben ansteigenden Unterseite 70 der Stützrampe 67 ist ein Lagerteil 63 einer Anschlußkonsole 13, 14 jeweils mittels mehrerer vorderer und hinterer Vertikalverschraubungen 71, 72 befestigbar.

Die Oberseite eines jeden Anschlußkonsolen-Tragteils 62 ist im hinteren Abschnitt 73 eben ausgebildet und im vorderen Abschnitt 74 schräg nach oben hochgezogen, an dessen vorderstem Abschnitt 68 die Querstange 69 aufgelagert und befestigt ist. Die Dicke der Tragteil-Platte nimmt von hinten beginnend bis etwa zur Mitte ihrer Längserstreckung keilförmig bis zu einem Höchstmaß zu und dann von dieser dicksten Querschnittsstelle bis zum vorderen Ende wieder auf ein bestimmtes Maß ab, wobei dieser zuletzt genannte Bereich die Stützrampe 67 bildet.

Das Tragteil 62 jeder Anschlußkonsole 13, 14 weist am Übergang zwischen ebenem Plattenbereich und schrägen Stützrampenbereich einen nach oben abragenden Befestigungsflansch 75 auf, an dem der Fahrerhaus-Boden 66 mit einer hochgezogenen Vorderkante 76 auf Anschlag angeschlossen und mittels mehrerer Horizontalverschraubungen 77 befestigt ist. Die zugehörigen Schraubenlöcher sind mit 77' bezeichnet. Der sich nach hinten anschließende Fahrerhaus-Boden-Bereich 78 ist auf der ebenen Oberseite des hinteren Abschnitts 73 des Anschlußkonsolen-Tragteils 62 aufgelagert und dort mittels der Vertikalverschraubungen 64, 65 festgespannt, wobei die vorderen Vertikalverschraubungen 64 im Bereich der größten Plattendicke und die Vertikalverschraubungen 65 am hinteren Platten-Endbereich angeordnet sind. Die zugehörigen Schraubenlöcher sind mit 64' bzw. 65' bezeichnet.

Das Lagerteil 63 jeder Anschlußkonsole 13, 14 weist oben eine Stirnplatte 79 mit ebener Oberseite 80 auf, mit der es an der ebenen Unterseite 70 der Stützrampe 67 eines Anschlußkonsolen-Tragteils 62 angeflanscht und dort mittels der Vertikalverschraubungen 71, 72 festgespannt ist. Die zugehörigen Schraubenlöcher in den Platten 67 und 79 sind mit 71' bzw. 72' bezeichnet.

Die vorderen Vertikalverschraubungen 71, mit denen das Lagerteil 63 jeder Anschlußkonsole 13, 14 mit seiner Stirnplatte 79 an der Stützrampe 67 eines Anschlußkonsolen-Tragteils 62 festgespannt ist, werden vorzugsweise auch zur Befestigung der Querstange 69 vorne am Tragteil-Oberseitenabschnitt 74 herangezogen.

Das Lagerteil 63 jeder Anschlußkonsole 13, 14 weist außer der Stirnplatte 79 ein von dieser nach unten beabstandetes erstes äußeres Maul 81 sowie ein zweites, weiter oben, aber ebenfalls von der Stirnplatte 79 nach unten beabstandetes inneres Maul 82 auf. Das äußere Maul 81 ist seitlich von Wänden 83, 84 mit diese durchsetzenden, horizontal quer fluchtenden Bohrungen 85, 86 begrenzt und dient zur seitengeführten Aufnahme sowie Lagerung des aus einem Lagerauge 87 mit eingebauten Lager 88 bestehenden oberen Endes eines Feder-Dämpfer-Beines 6 bzw. 7 mittels einer querdurchgehenden Lagerachse 89 am Lagerteil 63 einer Anschlußkonsole 13, 14. Das innere Maul 82 in jedem Anschlußkonsolen-Lagerteil 63 ist ebenfalls seitlich durch Wände 90, 91 mit diese durchsetzenden, horizontal quer fluchtenden Bohrungen 92, 93 begrenzt und dient zur seitengeführten Aufnahme und Lagerung eines vorderendig an der Stabilisatorschwinge 8 angeordneten Lagerauges 18 bzw. 19 samt darin eingebautem Lager 20 bzw. 21 mittels einer querdurchgehenden Lagerachse 94 bzw. 95 am Lagerteil 63 einer Anschlußkonsole 13, 14.

Im dargestellten Beispiel sind die innere Begrenzungswand 84 des ersten äußeren Maules 81 und die äußere Begrenzungswand 90 des zweiten inneren Maules 82 durch eine einzige gemeinsame Zwischenwand gebildet. Alle maulbegrenzenden Wände 83, 84, 90, 91 sind an der Unterseite der oberen Stirnplatte 79 abgestützt angeschlossen.

Das untere Lagerteil 63 jeder Anschlußkonsole 13, 14 kann entweder durch ein Stahlgußteil oder durch eine Schweißkonstruktion aus mehreren miteinander verschweißten Stahlblechen realisiert sein. In letzterem Fall ist die äußere Begrenzungswand 83 des äußeren Mauls 81 zur inneren Begrenzungswand 84 hin gebogen, dort angeschweißt und außerdem durch eine Vertikalrippe 96 zur Stirnplatte 79 hin abgestützt.

Das obere Tragteil 62 jeder Anschlußkonsole 13, 14 ist vorzugsweise durch ein Sphärogußteil realisiert.

Die vorderen Vertikalverschraubungen 71, mit denen das Lagerteil 63 jeder Anschlußkonsole 13, 14 mit seiner oberen Stirnplatte 79 an der Stützrampe 67 eines Anschlußkonsolen-Tragteils 62 festgespannt ist, sind vorzugsweise auf eine solche Grenzbelastung ausgelegt, daß dann, wenn im Frontalcrashfall des Lastkraftwagens verschiedene Deformationszonen in den Fahrerhaus-Lagerorganen 9, 10, 15, 16 bis an ihre vorgegebenen Grenzen verformt sind, die besagten vorderen Vertikalverschraubungen 71 abreißen, die benachbarten hinteren Vertikalverschraubungen 72 aber nur gedehnt werden und jedes Anschlußkonsolen-Lagerteil 63 sich dann rotatorisch um diese hinteren Vertikalverschraubungen 72 bewegen kann, wodurch sich ein Axialversatz der von der Stirnplatte 63 nach unten beabstandeten Feder-Dämpfer-Bein- und Stabilisatorschwinge-Anlenkstellen 81, 82 nach hinten ergibt.

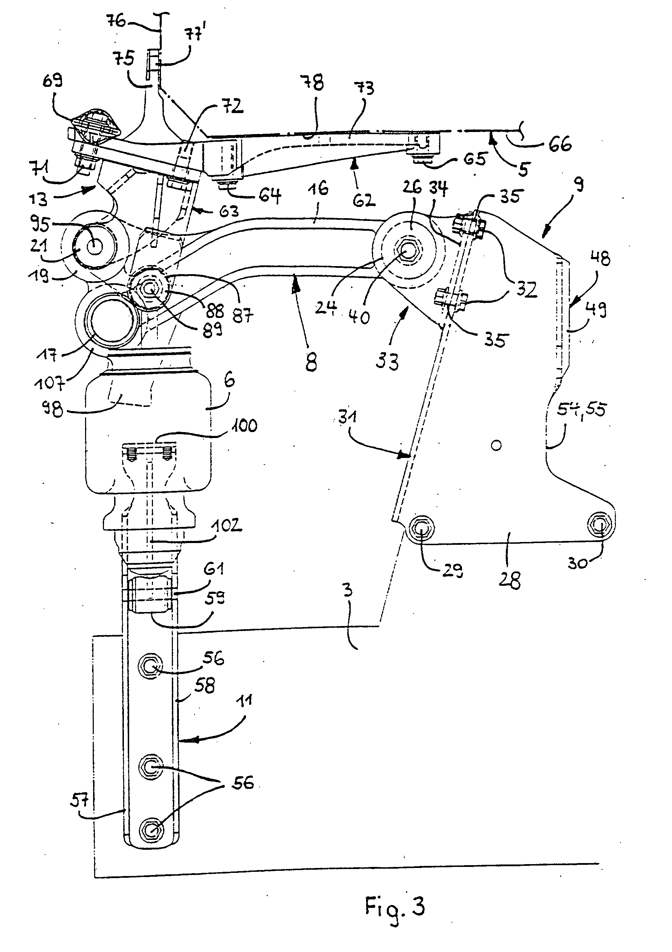

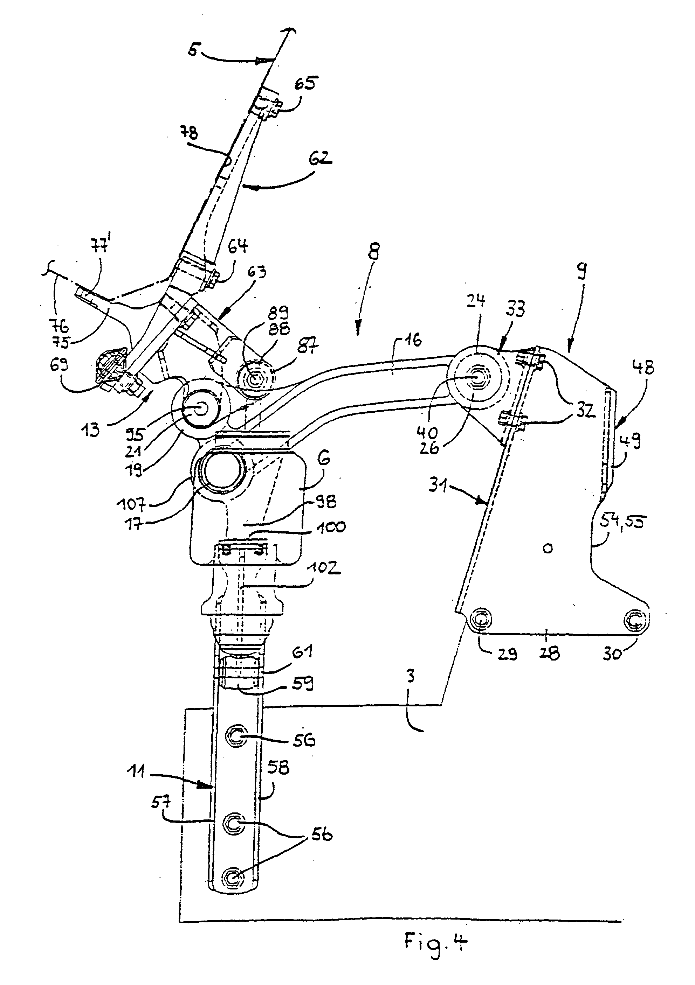

Die vordere Fahrerhaus-Lagerung verfügt auch über eine das Einfedern des Fahrerhauses beim Kippen begrenzende Einrichtung. Diese besteht aus zwei gleichlangen Anschlagfüßen 97, 98, von denen jeder unten abragend am vorderen Ende jeweils eines Längsarmes 15, 16 der U-förmigen Stabilisatorschwinge 8 angeordnet ist, und zwei zugehörigen rahmenfest angeordneten Anschlägen 99, 100. Im Fall des Ausführungsbeispiels gemäß Fig. 2 bis 7 ist der Anschlag 99 bzw. 100 durch eine austauschbare Anschlagplatte gebildet, die an einem hochgezogenen, durch einen Quersteg gebildeten oberen Ende eines Feder-Dämpfer-Bein-Halters 11 bzw. 12 gegebenenfalls elastisch nachgiebig oder abgefedert befestigt ist, wobei der die Anschlagplatte tragende Halter-Quersteg und die hochgeführte Halter-Wand durch eine mit ihnen verschweißte Versteifungsrippe 101 bzw. 102 unterstützt sind. Fig. 3 zeigt das Fahrerhaus in ungekippter Position und dabei die Anschlagfüße 97, 98 in einem solchen Abstand von den zugehörigen Anschlägen 99 bzw. 100, daß das normale Einfedern des Fahrerhauses 5 während der Fahrt nicht behindert wird. Fig. 4 dagegen zeigt das Fahrerhaus 5 in maximal gekippter Stellung, in der die Anschlagfüße 97 bzw. 98 auf den Anschlägen 99 bzw. 100 aufsitzen und so das weitere Einfedern der Feder-Dämpfer-Beine 6, 7 behindern. Während dieses Fahrerhaus-Kippvorganges beschreiben die Anschlagfüße 97, 98 eine rotatorische Bewegung um die Rotationsachse 27, die durch die hinterendigen Lager-Verschraubungen 40 der U-förmigen Stabilisatorschwinge 8 mit den Lagerböcken 9, 10 geht.

Im Fall des Ausführungsbeispiels gemäß Fig. 8 bis 10 ist der Anschlag 99, 100 nicht am Feder-Dämpfer-Bein-Halter 11 bzw. 12, sondern an einem eigenen Halter 103 bzw. 104 angeordnet, der wiederum an einem der beiden Multifunktionslagerschilde 3 bzw. 4 befestigt ist und im übrigen noch anderen, hier nicht interessierenden Zwecken dient. Die Lage, Ausbildung und Befestigungsart der Anschlagplatten sind gleich wie im vorgeschilderten Fall.

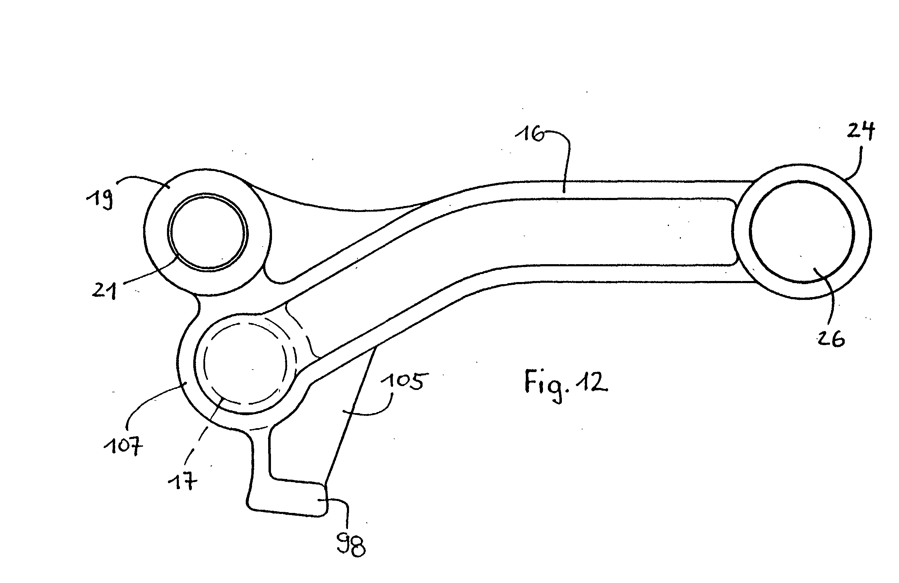

Die Anschlagfüße 97, 98 sind vorzugsweise jeweils einstückig mit den Längsarmen 15, 16 der U-förmigen Stabilisatorschwinge 8 ausgebildet und rückseitig - wie aus Fig. 12 ersichtlich - durch eine Strebe 105 zum jeweiligen Längsarm 15 bzw. 16 hin versteift. Der jeweilige Anschlagfuß 97 bzw. 98 geht dabei unten an einem längsarm-vorderendigen Aufnahmeauge 106, 107 ab, in dessen innenseitige Sackbohrung das zugehörige Ende der Querstange 17 form- und gegebenenfalls auch kraftschlüssig eingesetzt und anschließend angeschweißt ist.

Die vorbeschriebene erfindungsgemäße Bauweise der vorderen Fahrerhaus-Lagerung hat eine Reihe von Vorteilen, auf die nachfolgend eingegangen ist.

Sie ist komfortabel, kostengünstig, montagefreundlich, verspannungsfrei und crashoptimiert.

Der Komfort wird durch große Federwege erreicht. Da das hintere Lager der Stabilisatorschwinge rahmenseitig in einem ruhigen" Bereich des Fahrgestellrahmens angeordnet ist, ergibt sich auch eine Querschüttelverbesserung. Die Trennung der Komfortlager vom Drehlager für Kippen gewährleistet eine optimale Auslegung.

Die Kostensenkung wird dadurch erzielt, daß gegenüber bisherigen Fahrerhaus-Lagerungen verschiedene Teile entfallen.

Die Verbesserung der Montagefreundlichkeit ergibt sich dadurch, daß eine sehr gute Zugangsmöglichkeit zur Verbindungsstelle Fahrerhaus-Fahrgestellrahmen beim Fahrerhausaufsetzen gegeben ist.

Die Verspannungsfreiheit wird dadurch erzielt, daß Ausgleichsmöglichkeiten zwischen Stabilisatorschwinge und Fahrgestellrahmen einerseits sowie Fahrerhaus andererseits gegeben sind.

Die Crashoptimierung erfolgt durch energieverzehrende Ausgestaltung und/oder Anordnung verschiedener Lagerteile. Hierzu nachfolgend einige Anmerkungen.

Die hinteren Lagerböcke 9, 10 erfahren im Crashfall ab einem bestimmten Beanspruchungsniveau an den vorgesehenen Stellen örtlich starke Verformungen, wodurch eine Verlagerung der hinteren Stabilisatorschwingen-Lagerstellen nach hinten und unten erfolgt. Je nach Größe der von vorne auf das Fahrerhaus einwirkenden Kraft kann dann sogar ein Überschlagen der Stabilisatorschwinge 8 nach hinten erfolgen. Aufgrund dieses durch gezielte Bauteilauslegung bewirkten Effekts läßt sich im Crasfall eine größtmögliche Verschiebung des Fahrerhauses nach hinten gegenüber dem Fahrgestell erzielen als Kombination aus der Bogenbewegung der Stabilisatorschwingenlagerpunkte um eine tiefliegende Drehachse und der doppelten Stabilisatorschwingenarmlänge aus der Stabilisatorschwingen-Überschlagbewegung. Dabei bleibt während dieses gesamten Bewegungsablaufes eine feste Verbindung zwischen Fahrerhaus und Fahrgestell erhalten.

Bei der Version gemäß Fig. 2 bis 7, 22, 23 bauen die hinteren Lagerböcke 9, 10 relativ hoch, wobei deren Höhe z. B. das Doppelte der Länge im Bereich der unteren Anschlußzone 28 beträgt. Dieses begünstigt wegen der im Bereich des oberen Endes jedes Lagerbockes 9, 10 liegenden Anschlußstelle 40 der Stabilisatorschwinge 8 die Verformung der Lagerböcke 9, 10 in den konstruktiv vorgegebenen Bereichen.

Bei der Version gemäß Fig. 8 bis 10, 24, 25 bauen die hinteren Lagerböcke 9, 10 nicht so hoch, ihre Höhe entspricht hier z. B. der Lagerbock-Länge im Anschlußbereich 28. Dies hat zur Folge, daß hier im Crashfall ein kürzerer Hebelarm wirksam ist. Die Verformung ist daher bei diesen niedrigeren Lagerböcken 9, 10 nicht so stark wie bei jenen der anderen Version. Dafür ist hier ein Abriß der Lagerböcke 9, 10 im Bereich der vorderen Verschraubungen 29 vorgesehen, wobei dieser Abriß durch den Anschlag 48 und den hierdurch gegebenen Hebelarm zwischen dessen Anschlagstelle am Multifunktionslagerschild 3, 4 und der vorderen Verschraubung 29 unterstützt wird. Es erfolgt dann nach ihrem Abriß im Bereich der vorderen Schraubverbindung 29 ein rotatorischer Überschlag der Lagerböcke 9, 10 um die hinteren Schraubverbindungen 30 nach hinten sowie - je nach Stärke der Krafteinwirkung von vorne - auch hier ein Überschlag der Stabilisatorschwinge 8 mit einem entsprechenden Axialversatz des Fahrerhauses nach hinten. Auch hierbei bleibt während des gesamten besagten Bewegungsablaufes die Verbindung zwischen Fahrerhaus und Fahrgestell erhalten.

Da diese Funktion und Verhaltensweisen durch Crashversuche mit gebauten Lastkraftwagen-Prototypen bewiesen wurden, ergibt sich ein bisher noch nicht in der Praxis dargestellter Sicherheitsstandard im Bereich Fahrerhaus und Insassensicherheit.

## Patentansprüche

1. Vordere Lagerung des kippbaren Fahrerhauses eines Lastkraftwagens an dessen Fahrgestell und dort an zwei Multifunktionslagerschilden (3, 4), von denen jeder am vorderen Ende eines Rahmen-Längsträgers (1, 2) befestigt ist, umfassend folgende Bauteile, nämlich
a) zwei Feder-Dämpfer-Beine (6, 7),
b) eine - von oben gesehen - U-förmige Stabilisatorschwinge (8), bestehend aus einem rechten und linken Längsarm (15, 16), einer diese vorne fest miteinander verbindenden Querstange (17) und zwei, jeweils oberhalb des Übergangsbereichs zwischen Querstange (17) und einem Längsarm (15, 16) angeordneten Lageraugen (18, 19),
c) zwei hintere Lagerböcke (9, 10),
d) zwei Feder-Dämpfer-Bein-Halter (11, 12) und
e) zwei vordere, jeweils aus einem oberen Tragteil (62) und einem unteren Lagerteil (63) bestehenden Anschlußkonsolen (13, 14),
welche Bauteile wie folgt angeordnet und miteinander sowie mit dem Fahrerhaus (5) verbunden sind, nämlich
f) das untere Lagerteil (63) jeder vorderen Anschlußkonsole (13, 14) ist lösbar unten an deren oberem Tragteil (62) angeflanscht,
g) an jeweils einem Multifunktionslagerschild (3, 4) sind vorne seitlich außen ein Feder-Dämpfer-Bein-Halter (11, 12) und hinten oben ein hinterer Lagerbock (9, 10) lösbar befestigt,
h) jedes der beiden Feder-Dämpfer-Beine (6, 7) ist unten an einem Feder-Dämpfer-Bein-Halter (11, 12) und oben direkt an einem Lagerteil (63) einer Anschlußkonsole (13, 14) schwenkbar angelenkt,
i) die Stabilisatorschwinge (8) ist hinten über dort am Ende ihrer Längsarme (15, 16) angeordnete Lageraugen (23, 24) mit eingebauten Lagern (25, 26) und eine Lagerachse bzw. -schraube (40) an den beiden hinteren Lagerböcken (9, 10) quer- und längsgeführt sowie schwenkbar gelagert,
j) das Fahrerhaus (5) ist mit seinem Boden (66) an den beiden Anschlußkonsolen (13, 14), dort oben auf deren Tragteilen (62) aufliegend befestigt und über die Anschlußkonsolen (13, 14) sowie die Feder-Dämpfer-Beine (6, 7) gegenüber dem Fahrgestell-Rahmen (1, 2 bzw. 3, 4) abgefedert, und
k) das Fahrerhaus (5) ist über die Anschlußkonsolen (13, 14) durch deren Lagerteile (63) quergeführt und kippbar am vorderen Ende der Stabilisatorschwinge (8) angelenkt, über in deren Lageraugen (18, 19) eingebaute Lager (20, 21) mit in einer Horizontallinie (22) zueinander fluchtend in den Lagerteilen (63) der Anschlußkonsolen (13, 14) gefaßten Lagerachsen (94, 95).

2. Vordere Fahrerhaus-Lagerung nach Anspruch 1, **dadurch gekennzeichnet, daß** das obere Tragteil (62) jeder Anschlußkonsole (13, 14) durch eine großflächige Platte gebildet ist, die mit ihrem hinteren Abschnitt (73) über mehrere Vertikalverschraubungen (64, 65) am Fahrerhaus-Boden (66) befestigt ist und mit einem vorderen Abschnitt (74) den Fahrerhaus-Boden (66) vorne um ein gewisses Maß überragt und eine schräge Stützrampe (67) bildet, an deren freier Oberseite (68) eine die Lage der beiden Anschlußkonsolen (13, 14) stabilisierende Querstange (69) und an deren schräg nach vorn oben ansteigender Unterseite (70) ein Lagerteil (63) mittels mehrerer vorderer und hinterer Vertikalverschraubungen (71, 72) befestigbar ist.

3. Vordere Fahrerhaus-Lagerung nach Anspruch 2, **dadurch gekennzeichnet, daß** die Oberseite im hinteren Abschnitt (73) eines jeden Anschlußkonsolen-Tragteils (62) horizontal eben ausgebildet und im vorderen Abschnitt (74) schräg nach oben hochgezogen ist, wobei an deren vorderstem Abschnitt (68) die Querstange (17) auflagert und befestigt ist, und daß die Dicke des Tragteils (62) von hinten beginnend bis etwa zur Mitte seiner Längserstreckung keilförmig bis zu einem Höchstmaß zunimmt und dann von dieser dicksten Querschnittsstelle bis zum vorderen Ende wieder auf ein bestimmtes Maß abnimmt, wobei dieser zuletzt genannte Bereich die Stützrampe (67) bildet.

4. Vordere Fahrerhaus-Lagerung nach einem der vorhergehenden Ansprüche, **dadurch gekennzeichnet, daß** das Tragteil (62) jeder Anschlußkonsole (13, 14) am Übergang zwischen ebenem Plattenbereich (73) und schrägem Stützrampenbereich (74) einen nach oben abragenden Befestigungsflansch (75) aufweist, an dem der Fahrerhaus-Boden (66) mit einer hochgezogenen Vorderkante (76) auf Anschlag angeschlossen und mittels mehrerer Horizontalverschraubungen (77) befestigt ist, während der sich nach hinten anschließende Fahrerhaus-Boden-Bereich (78) auf der ebenen Oberseite des hinteren Abschnitts (73) des Anschlußkonsolen-Tragteils (62) aufgelagert und dort mittels mehrerer im Bereich der größten Dicke angeordneter Vertikalverschraubungen (64) und am hinteren Endbereich angeordneter Vertikalverschraubungen (65) festgespannt ist.

5. Vordere Fahrerhaus-Lagerung nach einem der Ansprüche 2 und 3, **dadurch gekennzeichnet, daß** das Lagerteil (63) jeder Anschlußkonsole (13, 14) oben eine Stirnplatte (79) mit ebener Oberseite (80) aufweist, mit der es an der ebenen Unterseite (70) der Stützrampe (67) eines Anschlußkonsolen-Tragteils (62) angeflanscht und dort mittels der Vertikalverschraubungen (71, 72) festgespannt ist.

6. Vordere Fahrerhaus-Lagerung nach Anspruch 5, **dadurch gekennzeichnet, daß** die vorderen Vertikalverschraubungen (71), mit denen das Lagerteil (63) jeder Anschlußkonsole (13, 14) mit seiner oberen Stirnplatte (79) an der Stützrampe (67) eines Anschlußkonsolen-Tragteils (62) festgespannt ist, gleichzeitig auch zur Befestigung der Querstange (69) vorne am Tragteil-Oberseiten-Abschnitt (68) herangezogen werden.

7. Vordere Fahrerhaus-Lagerung nach einem der Ansprüche 5 und 6, **dadurch gekennzeichnet, daß** die vorderen Vertikalverschraubungen (71), mit denen das Lagerteil (63) jeder Anschlußkonsole (13, 14) mit seiner oberen Stirnplatte (79) an der Stützrampe (67) eines Anschlußkonsolen-Tragteils (62) festgespannt ist, auf eine solche Grenzbelastung ausgelegt sind, daß dann, wenn im Frontalcrashfall verschiedene Deformationszonen in den Fahrerhaus-Lagerorganen (8, 9, 10) bis an ihre vorgegebenen Grenzen verformt sind, aber weiterhin eine nach hinten gerichtete Horizontalkraft wirksam ist, die besagten vorderen Vertikalverschraubungen (71) abreißen, die benachbarten hinteren Vertikalverschraubungen (72) aber nur gedehnt werden und jedes Anschlußkonsolen-Lagerteil (63) sich dann rotatorisch um diese hinteren Vertikalverschraubungen (72) bewegen kann, wodurch sich ein Axialversatz der von ihrer Stirnplatte (79) nach unten beabstandeten Feder-Dämpfer-Bein- und Stabilisatorschwinge-Anlenkstellen nach hinten ergibt.

8. Vordere Fahrerhaus-Lagerung nach einem der vorhergehenden Ansprüche, **dadurch gekennzeichnet, daß** das Lagerteil (63) jeder Anschlußkonsole (13, 14) außer einer oberen Stirnplatte (79), mit der es an der Stützrampe (67) des Anschlußkonsolen-Tragteils (62) angeflanscht ist, ein von der Stirnplatte (79) nach unten beabstandetes erstes äußeres Maul (81) mit seitlichen Begrenzungswänden (83, 84) und diese quer durchsetzenden Bohrungen (85, 86) für die seitengeführte Aufnahme und Lagerung des oberen Endes (87, 88) eines Feder-Dämpfer-Beines (6, 7) mittels einer querdurchgehenden Lagerachse (89) sowie ein zweites, weiter oben, aber ebenfalls von der Stirnplatte (79) nach unten beabstandet angeordnetes inneres Maul (82) mit seitlichen Begrenzungswände (90, 91) und diese quer durchsetzenden Bohrungen (92, 93) für die seitengeführte Aufnahme und Lagerung eines vorderendig an der Stabilisatorschwinge (8) angeordneten Lagerauges (18, 19) samt des darin eingebauten Lagers (20, 21) mittels einer querdurchgehenden Lagerachse (94, 95) aufweist.

9. Vordere Fahrerhaus-Lagerung nach Anspruch 8, **dadurch gekennzeichnet, daß** die innere Begrenzungswand (84) des äußeren Maules (81) und die äußere Begrenzungswand (90) des inneren Maules (82) jedes Anschlußkonsolen-Lagerteils (63) durch eine einzige, gemeinsame Zwischenwand gebildet und alle maulbegrenzenden Wände an der Unterseite der oberen Stirnplatte (79) abgestützt angeschlossen sind.

10. Vordere Fahrerhaus-Lagerung nach einem der vorhergehenden Ansprüche, **dadurch gekennzeichnet, daß** das Lagerteil (63) jeder Anschlußkonsole (13, 14) entweder durch ein Stahlgußteil oder durch eine Schweißkonstruktion aus mehreren vorgeformten Stahlblechteilen realisiert ist.

11. Vordere Fahrerhaus-Lagerung nach Anspruch 1, **dadurch gekennzeichnet, daß** die U-förmige Stabilisatorschwinge (8) entweder durch ein einstückiges Gesenkschmiedeteil realisiert oder aus drei vorgefertigten Einzelteilen zusammengesetzt ist, wobei in letzterem Fall die beiden Längsarme (15, 16) einschließlich aller Lageraugen und sonstiger Teile komplett jeweils durch ein Gesenkschmiede- oder Stahlgußteil und die Querstange (17) entweder durch ein Rohr oder ebenfalls ein vollmaterialiges Gesenkschmiedeteil gebildet ist und diese drei Teile fest miteinander verschweißt sind.

12. Vordere Fahrerhaus-Lagerung nach einem der Ansprüche 1 und 11, **dadurch gekennzeichnet, daß** die Längsarme (15, 16) der U-förmigen Stabilisatorschwinge (8) so geformt sind, daß sie bei einem Frontalcrashvorgang in Längsrichtung gezielt deformierbar sind, insofern eine energieabsorbierende Wirkung haben.

13. Vordere Fahrerhaus-Lagerung nach Anspruch 12, **dadurch gekennzeichnet, daß** die Längsarme (15, 16) der U-förmigen Stabilisatorschwinge (8) zwischen vorderem und hinterem Ende - von der Seite betrachtet - leicht nach oben durchgebogen und - von oben betrachtet - ungerade z. B. S- oder Z-förmig ausgebildet sind und insofern bei einem Frontalcrashvorgang definiert verformbare Falt-, Biegeoder Knickzonen aufweisen.

14. Vordere Fahrerhaus-Lagerung nach einem der Ansprüche 11 bis 13, **dadurch gekennzeichnet, daß** die beiden Längsarme (15, 16) innerhalb der U-förmigen Stabilisatorschwinge (8) gepfeilt zueinander in dem Sinne geordnet sind, daß deren hintere Enden weniger weit voneinander beabstandet sind als deren vordere Enden.

15. Vordere Fahrerhaus-Lagerung nach Anspruch 1, **dadurch gekennzeichnet, daß** jeder zur Lagerung der Stabilisatorschwinge (8) vorgesehene Lagerbock (9, 10) an seinem unteren Endbereich (28) durch zwei Schraubverbindungen (29, 30), eine (29) ganz vorn und eine (30) ganz hinten angeordnete, am rahmenfesten Multifunktionslagerschild (3, 4) befestigt ist und außerdem oberhalb dieser Befestigungszone, aber unterhalb der Anschlußebene für die Stabilisatorschwinge (8) eine im Frontalcrashfall definiert verformbare Falt- oder Knickzone aufweist, die durch konstruktive Maßnahmen wie Querschnittsreduzierungen, Materialschwächungen, Einbuchtungen, Einschnürungen oder dergleichen realisiert ist.

16. Vordere Fahrerhaus-Lagerung nach Anspruch 15, **dadurch gekennzeichnet, daß** jeder zur Lagerung der Stabilisatorschwinge (8) vorgesehene Lagerbock (9, 10) aus zwei Teilen zusammengesetzt ist, einem definiert verformbaren Hauptteil (31) und einem vorne an diesem angeflanscht mittels Verschraubungen (32) befestigten Anschlußteil (33), an dem ein Längsarm (15, 16) der Stabilisatorschwinge (8) über das an dessen hinterem Ende gegebene Lagerauge (23, 24) und das darin eingebaute Lager (25, 26) quergeführt sowie über eine querdurchgebende Lagerachse bzw. -schraube (40) längsgeführt und schwenkbar angelenkt ist.

17. Vordere Fahrerhaus-Lagerung nach Anspruch 16, **dadurch gekennzeichnet, daß** sowohl das Hauptteil (31) als auch das Anschlußteil (33) jedes zur Lagerung der Stabilisatorschwinge (8) vorgesehenen Lagerbockes (9, 10) durch ein Blechbiegeteil realisiert ist.

18. Vordere Fahrerhaus-Lagerung nach Anspruch 17, **dadurch gekennzeichnet, daß** das Anschlußteil (33) jedes zur Lagerung der Stabilisatorschwinge (8) vorgesehenen Lagerbockes (9, 10) in Draufsicht gesehen U-förmig gebogen ist und im einzelnen hinten eine ebene Anschlußplatte (34) mit mehreren Schraubendruchführungslöchern (35) sowie beidseitig an der Anschlußplatte (34) senkrecht und parallel zueinander angeordnet nach vorne abgewinkelte Seitenwangen (36, 37) mit zueinander fluchtenden Bohrungen (38, 39) für Hindurchführung einer Lagerachse bzw. -schraube (40) aufweist.

19. Vordere Fahrerhaus-Lagerung nach Anspruch 17, **dadurch gekennzeichnet, daß** das Hauptteil (31) jedes zur Lagerung der Stabilisatorschwinge (8) vorgesehenen Lagerbockes (9, 10) eine ebene und leicht nach hinten geneigte vordere Anschlußplatte (41) mit mehreren Schraubendurchführungslöchern (42) für das vorderseitige Anflanschen und Befestigen des Anschlußteiles (33) mittels einer entsprechenden Anzahl von Schraubenverbindungen (43) aufweist, und daß beiderseits der Anschlußplatte (41) senkrecht nach hinten abgewinkelte, parallel zueinander verlaufend angeordnete Seitenwangen (44, 45) mit Schraubendurchführungslächern (46, 47) für das Befestigen am Multifunktionslagerschild (3, 4) mittels der Schraubverbindungen (29, 30) vorgesehen sind.

20. Vordere Fahrerhaus-Lagerung nach Anspruch 19, **dadurch gekennzeichnet, daß** die beiden Seitenwangen (44, 45) des Hauptteils (31) jedes zur Lagerung der Stabilisatorschwinge (8) vorgesehenen Lagerbockes (9, 10) durch eine deren Abstand sicherstellende, nicht in der Deformationszone angeordnete Quertraverse (48) miteinander verbunden sind.

21. Vordere Fahrerhaus-Lagerung nach Anspruch 20, **dadurch gekennzeichnet, daß** die Quertraverse (48) durch eine hintenendig an einer Seitenwange (44 oder 45) zur gegenüberliegenden Seitenwange hin abgewinkelte und sich an dieser abstützend angeschweißten Querwange (49) gebildet ist.

22. Vordere Fahrerhaus-Lagerung nach Anspruch 19, **dadurch gekennzeichnet, daß** die Deformationszone an jedem zur Lagerung der Stabilisatorschwinge (8) vorgesehenen Lagerbock (9, 10) durch eine Einbuchtung bzw. einen Ausschnitt (54, 55) hinten in bzw. aus den Seitenwangen (44, 45) desselben realisiert ist, was - in Längsrichtung gesehen - eine Querschnittsverringerung in den Seitenwangen (44, 45) oberhalb von deren untenendigen Anschlußzonen (28) bedeutet.

23. Vordere Fahrerhaus-Lagerung nach Anspruch 20, **dadurch gekennzeichnet, daß** die Quertraverse (48) im vorderen Bereich des Hauptteils (31) eines jeden zur Lagerung der Stabilisatorschwinge (8) vorgesehenen Lagerbockes (9, 10), aber räumlich hinter der vorderen Schraubverbindung (29) angeordnet und beispielsweise durch ein VVinkelprofilstück (50), einen Bolzen oder ein Rohrstück realisiert sowie als Anschlag vorgesehen ist, der im Frontalcrashfall bei Deformation des Lagerbockes (9, 10) rotatorisch um die vordere Schraubverbindung (29) auf der Oberseite (51) des den Lagerbock (9, 10) aufnehmenden Multifunktionslagerschildes (3, 4) wegbegrenzend zur Anlage kommt.

24. Vordere Fahrerhaus-Lagerung nach einem der Ansprüche 15 bis 23, **dadurch gekennzeichnet, daß** der Abstand zwischen vorderen Schraubendurchführungslöchern (46) und der Peripherie des Lagerbockes (9, 10) so bemessen ist und/oder die zugehörige vordere Schraubverbindung (29), mit der ein zur Lagerung der Stabilisatorschwinge (8) vorgesehener Lagerbock (9, 10) am Multifunktionslagerschild (3, 4) befestigt ist, auf eine solche Grenzbelastung ausgelegt ist, daß dann, wenn im Frontalcrashfall der während der Deformation mit seiner anschlagbildenden Quertraverse (48; 50) an der Multifunktionslagerschild-Oberseite (51) zur Anlage gekommene und maximal bzw. weitestgehend deformierte Lagerbock (9, 10) weiterhin einer nach hinten gerichteten Horizontalkraft ausgesetzt ist, die vordere Verbindung sich auflöst, dabei der Lagerbock (9, 10) zur Peripherie hin ausreißt und/oder die vordere Schraubverbindung (29) abreißt, der Lagerbock (9, 10) sich dann rotatorisch um die hintere Schraubverbindung (30) nach hinten überschlagen und dann - je nach Stärke der Krafteinwirkung von vorne - auch ein Überschlag der Stabilisatorschwinge (8) mit entsprechend geführtem Axialversatz des Fahrerhauses (5) nach hinten um doppelte Stabilisatorschwingenarm-Länge folgen kann.

25. Vordere Fahrerhaus-Lagerung nach Anspruch 1, **dadurch gekennzeichnet, daß** eine das Einfedern des Fahrerhauses (5) während eines Kippvorganges begrenzende Einrichtung vorgesehen ist, dergestalt, daß die Stabilisatorschwinge (8) zwei Anschlagfüße (97, 98) aufweist, von denen jeder unten abragend am vorderen Ende jeweils eines Längsarmes (15, 16) angeordnet ist und denen jeweils ein rahmenfest angeordneter Anschlag (99, 100) zugeordnet ist.

26. Vordere Fahrerhaus-Lagerung nach Anspruch 25, **dadurch gekennzeichnet, daß** die Anschläge (99, 100) der Einfederungsbegrenzungseinrichtung grundsätzlich so weit von der Unterkante der Anschlagfüße (97, 98) enfernt sind, daß das Einfedern des ungekippten Fahrerhauses während der Fahrt im vorgegebenen Maßbereich nicht behindert ist.

27. Vordere Fahrerhaus-Lagerung nach Anspruch 25, **dadurch gekennzeichnet, daß** jeder ein Teil der Einfederungsbegrenzungseinrichtung bildende Anschlag (99, 100) durch eine austauschbare Anschlagplatte gebildet ist, die an einem rahmenfest, vorzugsweise einem Multifunktionslagerschild (3, 4) angeordneten Feder-Dämpfer-Bein-Halter (11, 12) und dort an einem hochgezogenen, durch einen Quersteg gebildeten oberen Ende gegebenenfalls elastisch nachgiebig oder abgefedert befestigt ist.

28. Vordere Fahrerhaus-Lagerung nach Anspruch 25, **dadurch gekennzeichnet, daß** jeder ein Teil der Einfederungsbegrenzungseinrichtung bildende Anschlag (99, 100) durch eine austauschbare Anschlagplatte gebildet ist, die an einem Quersteg eines Halters (103, 104) gegebenenfalls elastisch nachgiebig oder abgefedert befestigt ist, der selbst rahmenfest, vorzugsweise an einem Multifunktionslagerschild (3, 4) befestigt ist.

29. Vordere Fahrerhaus-Lagerung nach Anspruch 25, **dadurch gekennzeichnet, daß** jeder der beiden Anschlagfüße (97, 98) unten an einem am vorderen Ende eines Längsarmes (15, 16) gegebenen Aufnahmeauges (106, 107) abragt, in dessen innenseitige Sackbohrung das zugehörige Ende der Querstange (17) der Stabilisatorschwinge (8) eingesetzt und befestigt ist.

30. Vordere Fahrerhaus-Lagerung nach Anspruch 25, **dadurch gekennzeichnet, daß** jeder der beiden Anschlagfüße (97, 98) jeweils rückseitig durch eine Strebe (105) zum jeweiligen Längsarm (15, 16) hin versteift und einstückig mit den Längsarmen (15, 16) der U-förmigen Stabilisatorstange (8) ausgebildet sind.

## Claims

1. Front pivot mount of the tilting cab of a truck secured to its chassis frame and thereon to two multi-functional end plates (3, 4) of which each is secured to the front end of a chassis-frame longitudinal member (1, 2), comprising the following components, namely
a) two spring-and-damper struts (6, 7),
b) one U-shaped - when viewed from above - swinging-arm stabiliser (8), consisting of one right and one left longitudinal arm (15, 16), and a cross-member (17) firmly interconnecting the two at the front ends and two bearing eyes (18, 19), each of which is provided above the transitional zones between cross-member (17) and one longitudinal arm (15,16),
c) two rear mounts (9,10),
d) two spring-and-damper strut supports (11, 12), and
e) two front connecting brackets (13, 14), each consisting of an upper carrier section (62) and a lower bearing section (63)
said components being arranged and connected to each other and to the cab (5) as follows, namely
f) the bottom bearing section (63) of each front connecting bracket (13, 14) is detachably flanged on to the bottom of the top carrier sections (62) of said bracket (13, 14),
g) on each of the multi-functional end plates (3, 4) at the front on the outboard side one spring-and-damper strut support (11, 12) and on top at the rear a rear mount (9, 10) are secured by removable fasteners,
h) each of the two spring-and-damper struts (6, 7) pivots at the bottom on a spring-and-damper strut support (11, 12) and at the top on the bearing section (63) of a connecting bracket (13, 14),
i) the swinging-arm stabiliser (8) is mounted at the rear by means of bearing eyes (23, 24) with built-in bearings (25, 26) at the end of its longitudinal arms (15, 16) and by a bearing shaft or bolt (40) at the two rear mounts (9, 10) such that it is held laterally and longitudinally and pivots,
j) the cab (5) is secured by means of its floor (66) to the two connecting brackets (13, 14), resting at the top on and fastened to the carrier sections (62) thereof and spring-mounted on the chassis frame (1, 2 and 3, 4) by means of the connecting brackets (13, 14) and the spring-and-damper struts (6, 7), and
k) the cab (5) is held transversely by the mounting sections (63) of the connecting brackets (13, 14) so that it tilt-pivots on the front end of the swinging-arm stabiliser (8) by means of bearings (20, 21) mounted in the bearing eyes (18, 19) of the swinging-arm stabiliser (8) with bearing shafts (94, 95) horizontally in a line (22) flush with each other in the bearing sections (63) of the connecting brackets (13, 14).

2. Front pivot mount of the tilting cab of a motor-driven truck according to Claim 1, **characterised in that** the top carrier section (62) of each connecting bracket (13, 14) is formed by a large-area plate the rear section (73) of which is secured to the cab floor (66) by multiple vertical bolted fasteners (64, 65) and the front section (74) of which projects a certain distance beyond the cab floor (66) at the front and forms an inclined supporting ramp (67) on the free top face (68) of which a cross-member (69) stabilising the position of the two connecting brackets (13, 14) and on the forward-inclined underside (70) of which a bearing section (63) can be secured by means of multiple front and rear vertical bolted fasteners (71, 72).

3. Front pivot mount of the tilting cab of a motor-driven truck according to Claim 2, **characterised in that** the top of the rear section (73) of each connecting-bracket carrier section (62) is horizontally plane and the front section (74) is inclined upward, whereby the cross-member (17) rests on and is secured to the forward-most section (68), and that the thickness of the carrier section (62) starting from the rear increases in a tapering manner to approximately the middle of its longitudinal extent, there reaching a maximum and from this thickest cross-section tapering down to a certain size at the front end, whereby this latter section forms the supporting ramp (67).

4. Front pivot mount of the tilting cab of a motor-driven truck according to one of the preceding claims, **characterised in that** the carrier section (62) of each connecting bracket (13, 14) evinces at the transition between planar section (73) and inclined supporting-ramp section (74) an upward-projecting mounting flange (75) against which an upward-extended front edge (76) of the cab floor (66) abuts and is secured to which by means of multiple horizontal bolted fasteners (77), while the cab-floor section (78) contiguous to the rear rests on the planar top of the rear section (73) of the connecting-bracket carrier section (62) and is held thereon by means of multiple vertical bolted fasteners (64) disposed in the area of maximum thickness and by vertical bolted fasteners (65) disposed toward the rear.

5. Front pivot mount of the tilting cab of a motor-driven truck according to one of Claims 2 or 3, **characterised in that** the bearing section (63) of each connecting bracket (13, 14) evinces at the top a faceplate (79) with planar top (80) by means of which it is flange-mounted to the planar underside (70) of the supporting ramp (67) of a connecting-bracket carrier section (62) and secured in this position by means of vertical bolted fasteners (71, 72).

6. Front pivot mount of the tilting cab of a motor-driven truck according to Claim 5, **characterised in that** the front vertical bolted fasteners (71) by means of which the bearing section (63) of each connecting bracket (13, 14) is secured by its top faceplate (79) to the supporting ramp (67) of a connecting-bracket carrier section (62) are also used to secure the cross-member (69) at the front to the top face (68) of the carrier section.

7. Front pivot mount of the tilting cab of a motor-driven truck according to one of Claims 5 or 6, **characterised in that** the front vertical bolted fasteners (71) by means of which the bearing section (63) of each connecting bracket (13, 14) is secured by its top faceplate (79) to the supporting ramp (67) of a connecting-bracket carrier section (62) are designed for a limit load such that when in a head-on collision various crumple zones in the cab-mount elements (8, 9, 10) deform to their specified limits but a horizontal force continues to act toward the rear, said front vertical bolted fasteners (71) shear, the adjacent rear vertical bolted fasteners (72) however merely elongate and each connecting-bracket bearing section (63) can then rotate about these rear vertical bolted fasteners (72), producing an axial offset of the spring-and-damper strut and stabiliser swinging-arm pivot mounts located some distance below their respective faceplates (79).

8. Front pivot mount of the tilting cab of a motor-driven truck according to one of the preceding claims, **characterised in that** the bearing section (63) of each connecting bracket (13, 14), in addition to a top faceplate (79) by which it is flange-mounted to the supporting ramp (67) of the connecting-bracket carrier section (62) evinces a first outer mouth (81) some distance below the face plate (79) and with lateral limiting walls (83, 84) through-penetrated by transverse bores (85, 86) for the lateral fixation and mounting of the upper end (87, 88) of a spring-and-damper strut (6, 7) by means of a bearing shaft (89) passing transversely through them, and a second inner mouth (82) located higher up but also below the faceplate (79) and with lateral delimiting walls (90, 91) through-penetrated by transverse bores (92, 93) for the lateral fixation and mounting of a bearing eye (18, 19) disposed toward the leading end of the swinging-arm stabiliser (8), complete with the bearing (20, 21) installed therein, by means of a bearing shaft (94, 95) transversely passing through said eye (18, 19).

9. Front pivot mount of the tilting cab of a motor-driven truck according to Claim 8, **characterised in that** the inboard limiting wall (84) of the outer mouth (81) and the outboard limiting wall (90) of the inner mouth (82) of each connecting-bracket bearing section (63) are formed by a single, common web and all mouth-delimiting walls abut on to and are supported against the underside of the top faceplate (79).

10. Front pivot mount of the tilting cab of a motor-driven truck according to one of the preceding claims, **characterised in that** the bearing section (63) of each connecting bracket (13, 14) is realised either as a steel casting or as a welded construction consisting of multiple preformed sheet-steel components.

11. Front pivot mount of the tilting cab of a motor-driven truck according to Claim 1, **characterised in that** the U-shaped swinging-arm stabiliser (8) is either realised by a one-piece drop-forged part or is a combination of three preformed single parts, whereby in the latter case each of the two longitudinal arms (15, 16) including all bearing eyes and other parts is formed entirely by a drop-forged part or steel casting and the cross-member (17) is formed either by a tubular part or solid drop-forged part and these three parts are firmly welded together.

12. Front pivot mount of the tilting cab of a motor-driven truck according to one of Claims 1 and 11, **characterised in that** the longitudinal arms (15, 16) of the U-shaped swinging-arm stabiliser (8) are shaped so as to specifically deform longitudinally in a head-on collision and insofar have an energy-absorbing effect.

13. Front pivot mount of the tilting cab of a motor-driven truck according to Claim 12, **characterised in that** the longitudinal arms (15, 16) of the U-shaped swinging-arm stabiliser (8) between the leading and trailing ends - as viewed from the side - evince a slight upward curve and - as viewed from above - are not straight, for example S-shaped or Z-shaped, and insofar evince folding, bending or buckling zones of defined deformability in the event of a head-on collision.

14. Front pivot mount of the tilting cab of a motor-driven truck according to one of Claims 11 to 13, **characterised in that** the two longitudinal arms (15, 16) are arrowed toward each other inside the U-shaped swinging-arm stabiliser (8) in the sense that their trailing ends are less far apart from each other than their leading ends.

15. Front pivot mount of the tilting cab of a motor-driven truck according to Claim 1, **characterised in that** each mount (9, 10) provided for mounting the swinging-arm stabiliser (8) is secured at its bottom end (28) by two bolted fasteners (29, 30), one (29) far to the front and one (30) far to the rear, to the chassis-frame-mounted multi-functional end plates (3, 4) and in addition, above this securing zone but below the connecting plane for the swinging-arm stabiliser (8), evinces a folding or buckling zone of defined deformability in the event of a head-on collision, said zone being realised by means of design measures such as reduced cross-sections, material weakening, indentations, constrictions, or similar.

16. Front pivot mount of the tilting cab of a motor-driven truck according to Claim 15, **characterised in that** each rear mount (9, 10) provided for mounting of the swinging-arm stabiliser (8) consists of two parts, a main section (31) of defined deformability and, flange-mounted to the front end thereof by means of bolted fasteners (32), a connecting section (33) providing transverse mounting for a longitudinal arm (15, 16) of the swinging-arm stabiliser (8) by means of the bearing eye (23, 24) at the trailing end of the former, and the eye-mounted bearing (25, 26), and providing longitudinal and pivoting mounting by means of a transversely insertable bearing shaft or bearing bolt (40).

17. Front pivot mount of the tilting cab of a motor-driven truck according to Claim 16, **characterised in that** both the main section (31) and the connecting section (33) of each mount (9, 10) provided for mounting the swinging-arm stabiliser (8) are realised by a folded sheet-metal part.

18. Front pivot mount of the tilting cab of a motor-driven truck according to Claim 17, **characterised in that** the connecting section (33) of each mount (9, 10) provided for mounting the swinging-arm stabiliser (8) is U-shaped in top view and in detail evinces at the rear a planar connecting plate (34) with multiple through-holes (35) for bolted fasteners, and side cheeks (36, 37) normal to the connecting plate (34), one on each side and parallel to each other and angled forward, with aligned bores (38, 39) through which a bearing shaft or bearing bolt (40) can be inserted.

19. Front pivot mount of the tilting cab of a motor-driven truck according to Claim 17, **characterised in that** the main section (31) of each rear mount (9, 10) provided for mounting of the swinging-arm stabiliser (8) evinces a planar and slightly rearward-tilted front connecting plate (41) with multiple through-holes for bolted fasteners (42) for the forward flange-mounting and securing of the connecting section (33) by means of a corresponding number of bolted fasteners (43) and that side cheeks (44, 45) are provided normal to the connecting plate (41), one on each side and parallel to each other and angled backward, with through-holes (46, 47) for bolts for securing to the multi-functional end plates (3, 4), by means of the bolted fasteners (29, 30).

20. Front pivot mount of the tilting cab of a motor-driven truck according to Claim 19, **characterised in that** the two side cheeks (44, 45) of the main section (31) of each mount (9, 10) provided for mounting the swinging-arm stabiliser (8) are interconnected by a traverse (48) that is not located in the crumple zone and ensures their spacing.

21. Front pivot mount of the tilting cab of a motor-driven truck according to Claim 20, **characterised in that** the traverse (48) is formed by a transverse web (49) angled at the rear at a side cheek (44 or 45) toward the opposite side cheek and supported thereon by welding.

22. Front pivot mount of the tilting cab of a motor-driven truck according to Claim 19, **characterised in that** the crumple zone on each mount (9, 10) provided for mounting the swinging-arm stabiliser (8) is realised by an indentation in or a cut-out (54, 55) from the side cheek (44, 45) of same, which - viewed in the longitudinal direction - signifies a reduction in the cross-section of the side cheeks (44, 45) above their bottom connecting zones (28).

23. Front pivot mount of the tilting cab of a motor-driven truck according to Claim 20, **characterised in that** the traverse (48) is located in the forward area of the main section (31) of each mount (9, 10) provided for mounting the swinging-arm stabiliser (8) but spatially behind the front bolted fastener (29) and is realised for example by an angle piece (50), a stud or a length of tubing and is also provided as a stop, which in a head-on collision with deformation of the rear mount (9, 10) rotates about the front bolted fastener (29) and comes to rest on the top face (51) of the multi-functional end plate (3, 4) carrying the mount (9, 10), thus limiting deflection.

24. Front pivot mount of the tilting cab of a motor-driven truck according to one of Claims 15 to 23, **characterised in that** the spacing between front through-holes (46) for bolted fasteners and the periphery of the mount (9, 10) is dimensioned so that and/or the associated front bolted fastener (29) with which the mount (9, 10) provided for mounting the swinging-arm stabiliser (8) is secured to the multi-functional end plate (3, 4) is designed for a limit load such that in the event of a head-on collision the mount (9, 10) deforming with the traverse (48; 50) forming a stop comes into contact with the top face (51) of the multi-functional end plate having deformed to its maximum extent or to a very large extent but still subjected to a horizontal force acting toward the rear, the front fastener releases, the mount (9, 10) tears toward the periphery and/or the front bolted fastener (29) shears off, the mount (9, 10) can then flip-rotate about the rear bolted fastener (30) towards the rear and then - depending on the strength of the force acting from the front - the swinging-arm stabiliser (8) can also flip with the corresponding axial offset of the cab (5) toward the rear by twice the arm length of the swinging-arm stabiliser.

25. Front pivot mount of the tilting cab of a motor-driven truck according to Claim 1, **characterised in that** a device limiting spring-compression movement of the cab (5) during the tilting process is provided that is of a design such that the swinging-arm stabiliser (8) evinces two stop feet (97, 98) each of which projects below the front end of a longitudinal arm (15, 16) and each of which has a corresponding chassis-frame-mounted stop (99, 100).

26. Front pivot mount of the tilting cab of a motor-driven truck according to Claim 25, **characterised in that** the stops (99, 100) of the spring-compression-movement limiting device are basically situated so far from the bottom edge of the stop feet (97, 98) that the spring-compression movement of the untilted cab within the specified range is not restricted when the vehicle is on the move.

27. Front pivot mount of the tilting cab of a motor-driven truck according to Claim 25, **characterised in that** each stop (99, 100) forming part of the spring-compression-movement limiting device is formed by an exchangeable stop plate secured to a chassis-frame-mounted spring-and-damper strut support (11, 12), disposed by preference on a multi-functional end plate (3, 4), and thereon to an upward-extended upper end formed by a transverse web in a resilient or cushioning manner, as necessary.

28. Front pivot mount of the tilting cab of a motor-driven truck according to Claim 25, **characterised in that** each stop (99, 100) forming part of the spring-compression-movement limiting device is formed by an exchangeable stop plate secured to a transverse web of a bracket (103, 104) in a resilient or cushioning manner, as necessary, which bracket (103, 104) itself is chassis-frame-mounted, by preference on a multi-functional end plate (3, 4).

29. Front pivot mount of the tilting cab of a motor-driven truck according to Claim 25, **characterised in that** each of the two stop feet (97, 98) projects downwards at a locating eye (106, 107) at the front end of a longitudinal arm (15, 16) into the inboard blind bore of which eye (106, 107) the corresponding end of the cross-member (17) of the swinging-arm stabiliser (8) is inset and is secured.

30. Front pivot mount of the tilting cab of a motor-driven truck according to Claim 25, **characterised in that** each of the two stop feet (97, 98) evinces on the rear a brace (105) reinforcing it against the corresponding longitudinal arm (15, 16) and formed in one piece with the longitudinal arms (15, 16) of the U-shaped swinging-arm stabiliser (8).

## Revendications

1. Suspension avant de la cabine basculante d'un camion sur son châssis et, à ce niveau, sur deux flasques multifonctions (3, 4) fixés chacun à l'extrémité antérieure d'un longeron de cadre (1, 2), comprenant les éléments suivants :
a) deux combinés ressort/amortisseur (6, 7),
b) un stabilisateur (8) en forme de U - vu de dessus - constitué de bras longitudinaux droit et gauche (15, 16), d'une barre transversale (17) solidarisant à l'avant ces bras entre eux et deux coussinets (18, 19) disposés à chaque fois au-dessus de la zone de transition entre la traverse (17) et un bras longitudinal (15, 16),
c) deux supports d'articulation postérieurs (9, 10),
d) deux supports de combiné ressort/amortisseur (11, 12) et
e) deux consoles antérieures (13, 14) constituées chacune d'un élément supérieur porteur (62) et d'un élément inférieur d'articulation (63),
lesdits composants étant disposés et reliés entre eux ainsi qu'avec la cabine (5) comme suit :
f) l'élément inférieur d'articulation de chaque console est bridé sur le dessous à celle de l'élément supérieur porteur (62) de manière amovible,
g) à chacun des flasques multifonctions (3, 4), sont fixés de manière amovible, à l'avant, sur la face extérieure latérale, un support de combiné ressort/amortisseur (11, 12) et, à l'arrière, en haut, un support d'articulation postérieur (9, 10),
h) chacun des deux combinés ressort/amortisseur (6, 7) est articulé sur pivot, en bas, sur un support de combiné ressort/amortisseur (11, 12) et, en haut, sur l'élément d'articulation (63) d'une console (13, 14),
i) le stabilisateur (8) est guidé transversalement et longitudinalement ainsi qu'articulé sur pivot, à l'arrière, sur les deux supports d'articulation postérieurs (9, 10), par l'intermédiaire de coussinets (23, 24) à paliers intégrés (25, 26) disposés à ce niveau à l'extrémité de ses bras longitudinaux (15, 16), et d'un axe ou d'une vis de palier (40),
j) la cabine (5) est fixée par son plancher (66) aux deux consoles (13, 14), reposant en haut sur leur élément porteur (62) et suspendue par rapport au cadre du châssis (1, 2 ou 3, 4) par l'intermédiaire des consoles (13, 14) ainsi que des combinés ressort/amortisseur (6, 7), et
k) la cabine (5) est guidée transversalement par l'intermédiaire des consoles (13, 14), par leurs éléments d'articulation (63), et articulée de manière à pouvoir basculer à l'extrémité antérieure du stabilisateur (8), par l'intermédiaire de paliers (20, 21) montés dans les coussinets (18, 19), à l'aide d'axes d'articulation (94, 95) alignés suivant une ligne horizontale (22) et emprisonnés dans les éléments d'articulation (63) des consoles (13, 14).

2. Suspension avant de cabine suivant la revendication 1, **caractérisée en ce que** l'élément supérieur porteur (62) de chaque console (13, 14) est constitué d'une plaque de grande surface dont la partie postérieure (73) est fixée au plancher de la cabine (66) par l'intermédiaire de plusieurs boulons verticaux (64, 65) et dont la partie antérieure (74) dépasse d'une certaine cote le plancher de la cabine (66) et forme une rampe d'appui inclinée (67), sur la face supérieure libre (68) de laquelle peuvent être fixés au moyen de plusieurs boulons antérieurs et postérieurs (71, 72) une barre transversale (69) stabilisant la position des deux consoles (13, 14) et, à la face inférieure montant en biais vers l'avant (70), un élément d'articulation (63).

3. Suspension avant de cabine suivant la revendication 2, **caractérisée en ce que** la face supérieure de chaque élément porteur (62) des consoles est horizontalement plane à sa partie arrière (73) et relevée en biais vers le haut à sa partie avant (74), la barre transversale (17) reposant et étant fixée sur la partie la plus antérieure (68), et **en ce que** l'épaisseur de l'élément porteur (62) augmente progressivement de l'arrière jusqu'au milieu environ de son extension longitudinale, où elle atteint son maximum, et qu'elle diminue alors à nouveau jusqu'à une certaine cote de ce point de section la plus épaisse jusqu'à l'extrémité antérieure, cette dernière plage citée constituant la rampe d'appui (67).

4. Suspension avant de cabine suivant l'une des revendications précédentes, **caractérisée en ce que** l'élément porteur (62) de chaque console (13, 14) présente au niveau de la transition entre zone plane (73) de la plaque et zone inclinée de la rampe d'appui (74) une bride de fixation (75) en saillie vers le haut, à laquelle le plancher de la cabine (66) est raccordé en butée par un bord antérieur relevé (76) et fixé au moyen de plusieurs boulons horizontaux (77), tandis que la partie adjacente du plancher de la cabine, vers l'arrière (78), repose sur la face supérieure plane de la partie postérieure (73) de l'élément porteur (62) de la console et y est fixée au moyen de plusieurs boulons verticaux (64) disposés dans la zone de la plus grande épaisseur et de boulons verticaux (65) disposés au niveau de la zone terminale postérieure.

5. Suspension avant de cabine suivant l'une des revendications 2 et 3, **caractérisée en ce que** l'élément d'articulation (63) de chaque console (13, 14) présente en haut une plaque frontale (79) à face supérieure plane (80) par laquelle il est bridé sur la face inférieure plane (70) de la rampe d'appui (67) de l'élément porteur (62) d'une console et où il est fixé au moyen des boulons verticaux (71, 72).

6. Suspension avant de cabine suivant la revendication 5, **caractérisée en ce que** les boulons verticaux antérieurs (71) par lesquels l'élément d'articulation (63) de chaque console (13, 14) est fixé par sa plaque frontale supérieure (79) à la rampe d'appui (67) de l'élément porteur (62) d'une console servent en même temps à la fixation de la barre transversale (69) à l'avant de la partie (68) de la face supérieure de l'élément porteur.

7. Suspension avant de cabine suivant l'une des revendications 5 et 6, **caractérisée en ce que** les boulons verticaux antérieurs (71) par lesquels l'élément d'articulation (63) de chaque console (13, 14) est fixé par sa plaque frontale supérieure (79) à la rampe d'appui (67) de l'élément porteur (62) d'une console sont conçus pour supporter une sollicitation limite telle qu'en cas de collision frontale, différentes zones de déformation prévues dans les organes de suspension de la cabine (8, 9, 10) sont déformées jusqu'aux limites qui leur ont été imposées, mais qu'il subsiste une force horizontale dirigée vers l'arrière, que lesdits boulons verticaux antérieurs (71) sont arrachés, mais que les boulons verticaux postérieurs adjacents (72) ne sont qu'étirés et que l'élément d'articulation (63) de chaque console peut alors se déplacer dans un mouvement de rotation autour de ces boulons verticaux postérieurs (72), ce qui se traduit par un déport axial vers l'arrière des points d'articulation du combiné ressort/amortisseur et du stabilisateur, maintenus écartés vers le bas par la plaque frontale (79).

8. Suspension avant de cabine suivant l'une des revendications précédentes, **caractérisée en ce que** l'élément d'articulation (63) de chaque console (13, 14) présente, outre une plaque frontale supérieure (79) par laquelle il est bridé à la rampe d'appui (67) de l'élément porteur (62) de la console, une première mâchoire extérieure (81) maintenue vers le bas à distance de la plaque frontale (79) et dotée de parois de délimitation latérales (83, 84) et de lumières (85, 86) traversant ces dernières et destinées à recevoir et à supporter avec guidage latéral l'extrémité supérieure (87, 88) d'un combiné ressort/amortisseur (6, 7) au moyen d'un axe d'articulation traversant (89), ainsi qu'une seconde mâchoire intérieure (2) disposée plus haut mais aussi maintenue vers le bas à distance de la plaque frontale (79) et dotée de parois de délimitation latérales (90, 91) et de lumières (92, 93) traversant ces dernières et destinées à recevoir et à supporter avec guidage latéral un coussinet (18, 19) disposé avec son palier (20, 21) à l'extrémité antérieure du stabilisateur (8) au moyen d'un axe d'articulation traversant (94, 95).

9. Suspension avant de cabine suivant la revendication 8, **caractérisée en ce que** la paroi de délimitation intérieure (84) de la mâchoire extérieure (81) et la paroi de délimitation extérieure (90) de la mâchoire intérieure (82) de l'élément d'articulation (63) de chaque console sont constituées d'une seule cloison commune et que toutes les parois limitant les mâchoires sont raccordées en appui à la face inférieure de la plaque frontale supérieure (79).

10. Suspension avant de cabine suivant l'une des revendications précédentes, **caractérisée en ce que** l'élément d'articulation (63) de chaque console (13, 14) est réalisé soit sous forme d'une pièce moulée en acier, soit formé d'un assemblage soudé de plusieurs pièces préformées en tôle d'acier.

11. Suspension avant de cabine suivant la revendication 1, **caractérisée en ce que** le stabilisateur en forme de U (8) est soit réalisé sous forme d'une pièce matricée monobloc, soit composé de trois éléments préfabriqués, les deux bras longitudinaux (15, 16), y compris tous les coussinets et autres pièces, étant dans ce dernier cas constitués d'une pièce monobloc matricée ou moulée en acier, et la barre transversale (17) soit d'un tube soit également d'une pièce matricée pleine, et ces trois éléments étant assemblés par soudage.

12. Suspension avant de cabine suivant l'une des revendications 1 et 11, **caractérisée en ce que** les bras longitudinaux (15, 16) du stabilisateur en forme de U (8) ont une forme telle qu'en cas de collision frontale, ils puissent se déformer dans des conditions bien définies dans la direction horizontale et aient ainsi un effet d'absorption de l'énergie.

13. Suspension avant de cabine suivant la revendication 12, **caractérisée en ce que** les bras longitudinaux (15, 16) du stabilisateur en forme de U (8) sont légèrement recourbés vers le haut entre extrémités antérieure et postérieure - vu de côté - et sont de forme non droite - vu de dessus -, par exemple en S ou en Z, et présentent ainsi en cas de collision frontale des zones de pliage, flexion ou flambage à possibilités de déformation bien définies.

14. Suspension avant de cabine suivant l'une des revendications 11 à 13, **caractérisée en ce que** les deux bras longitudinaux (15, 16) du stabilisateur en forme de U (8) sont disposés en flèche, en ce sens que leurs extrémités postérieures sont moins espacées l'une de l'autre que leurs extrémités antérieures.

15. Suspension avant de cabine suivant la revendication 1, **caractérisée en ce que** chaque support (9, 10) prévu pour le montage du stabilisateur (8) est fixé au flasque multifonction (3, 4) solidaire du châssis, au niveau de sa zone terminale inférieure (28), par deux boulons (29, 30), disposés l'un (29) tout à l'avant et l'autre (30) tout à l'arrière, et présente par ailleurs, au-dessus de cette zone de fixation, mais au-dessous du plan de raccordement du stabilisateur (8), une zone de pliage ou de flambage à possibilités de déformation bien définies en cas de collision frontale, obtenues par mesures prises au niveau du dessin, telles que réductions de section, dépouilles, embrèvements, étranglements, etc.

16. Suspension avant de cabine suivant la revendication 15, **caractérisée en ce que** chaque support d'articulation (9, 10) prévu pour le montage du stabilisateur (8) se compose de deux éléments, un élément principal (31) à possibilités de déformation bien définies et, bridé à l'avant de ce dernier, un élément de raccordement (33) fixé au moyen de boulons (32), sur lequel s'articule sur pivot un bras longitudinal (15, 16) du stabilisateur (8), avec guidage transversal par l'intermédiaire d'un coussinet (23, 24) disposé à son extrémité postérieure et du palier associé (25, 26), et avec guidage longitudinal par l'intermédiaire d'un axe ou d'une vis d'articulation traversante (40).

17. Suspension avant de cabine suivant la revendication 16, **caractérisée en ce que** l'élément principal (31) comme l'élément de raccordement (33) de chaque support d'articulation (9, 10) prévu pour le montage du stabilisateur (8) sont réalisés sous forme de pièces en tôle pliée.

18. Suspension avant de cabine suivant la revendication 17, **caractérisée en ce que** l'élément de raccordement (33) de chaque support d'articulation (9, 10) prévu pour le montage du stabilisateur (8) est, vu de dessus, recourbé en forme de U et présente à l'arrière une plaque de raccordement plane (34) comportant plusieurs trous de passage de vis (35) ainsi que, des deux côtés de la plaque de raccordement (34), des joues latérales (36, 37) verticales et parallèles, dirigées vers l'avant et traversées de trous alignés (38, 39) pour le passage d'un axe ou d'une vis d'articulation (40).

19. Suspension avant de cabine suivant la revendication 17, **caractérisée en ce que** l'élément principal (31) de chaque support d'articulation (9, 10) prévu pour le montage du stabilisateur (8) présente une plaque de raccordement antérieure plane et légèrement inclinée vers l'arrière (41), comportant plusieurs trous de passage de vis (42) pour le bridage et la fixation à l'avant de l'élément de raccordement (33) au moyen d'un nombre correspondant de boulons (43), et que des deux côtés de la plaque de raccordement (41), sont prévues des joues latérales (44, 45) verticales et parallèles, dirigées vers l'arrière et traversées de trous de passage de vis (46, 47) pour la fixation au flasque multifonction (3, 4) au moyen des boulons (29, 30).

20. Suspension avant de cabine suivant la revendication 19, **caractérisée en ce que** les deux joues latérales (44, 45) de l'élément principal (31) de chaque support d'articulation (9, 10) prévu pour le montage du stabilisateur (8) sont reliées par une traverse (48) assurant leur écartement, non disposée dans la zone de déformation.

21. Suspension avant de cabine suivant la revendication 20, **caractérisée en ce que** la traverse (48) est constituée d'une joue transversale (49) coudée à l'extrémité postérieure d'une joue latérale (44 ou 45) en direction de la joue latérale opposée et soudée en appui sur cette dernière.

22. Suspension avant de cabine suivant la revendication 19, **caractérisée en ce que** la zone de déformation située au niveau de chaque support d'articulation (9, 10) prévu pour le montage du stabilisateur (8) est réalisée sous forme d'un embrèvement ou d'une découpe (54, 55) sur ou dans l'arrière des joues latérales (44, 45), ce qui - vu dans la direction longitudinale - se traduit par une réduction de la section des joues latérales (44, 45) au-dessus de leurs zones de raccordement (28) situées à leur extrémité inférieure.

23. Suspension avant de cabine suivant la revendication 20, **caractérisée en ce que** la traverse (48) est disposée dans la partie antérieure de l'élément principal (31) de chaque support d'articulation (9, 10) prévu pour le montage du stabilisateur (8), mais, dans l'espace, derrière le boulon antérieur (29), qu'elle est réalisée, par exemple, sous forme d'un morceau de cornière (50), d'un axe ou d'un morceau de tube et qu'elle est prévue comme butée qui, en cas de collision frontale et de déformation du support d'articulation (9, 10), vient porter, par rotation autour du boulon antérieur (29), sur la face supérieure (51) du flasque multifonction (3, 4) recevant le support d'articulation (9, 10), en limitant le déplacement.

24. Suspension avant de cabine suivant l'une des revendications 15 à 23, **caractérisée en ce que** l'écartement entre les trous de passage de vis antérieurs (46) et la périphérie du support d'articulation (9, 10) est dimensionné de telle manière et/ou le boulon anténeur associé (29) par lequel un support d'articulation (9, 10) prévu pour le montage du stabilisateur (8) est fixé au flasque multifonction (3, 4) est conçu pour supporter une sollicitation limite telle que, lorsqu'en cas de collision frontale, le support d'articulation (9, 10) venu porter durant la déformation par sa traverse formant butée (48, 50) sur la face supérieure (51) du flasque multifonction et déformé au maximum continue d'être soumis à une force horizontale dirigée vers l'arrière, la liaison antérieure se désintègre, le support d'articulation (9, 10) se déchirant alors vers la périphérie et/ou le boulon antérieur (29) étant arraché, le support d'articulation (9, 10) pouvant alors basculer vers l'arrière par rotation autour du boulon postérieur (30), et - suivant l'intensité de la force agissant de l'avant - un basculement du stabilisateur (8) pouvant également avoir lieu, avec déport axial correspondant de la cabine (5) vers l'arrière du double de la longueur des bras du stabilisateur.

25. Suspension avant de cabine suivant la revendication 1, **caractérisée en ce qu'**il est prévu un dispositif limitant le débattement de la cabine (5) lors d'une opération de basculement, de telle manière que le stabilisateur (8) présente deux pieds de butée (97, 98), dont chacun est disposé en saillie vers le bas, à l'extrémité antérieure d'un bras longitudinal (15, 16), et à chacun desquels est associé une butée (99, 100) solidaire du cadre.

26. Suspension avant de cabine suivant la revendication 25, **caractérisée en ce que** les butées (99, 100) du dispositif de limitation du débattement se trouvent systématiquement à une distance suffisante du bord inférieur des pieds de butée (97, 98) pour ne pas entraver le débattement de la cabine non basculée dans les limites imposées durant la marche.

27. Suspension avant de cabine suivant la revendication 25, **caractérisée en ce que** chaque butée (99, 100) constituant une partie du dispositif de limitation du débattement est constituée d'une plaque de butée interchangeable, fixée, le cas échéant en flexion élastique ou avec suspension, à un support de combiné ressort/amortisseur (11, 12) solidaire du châssis et de préférence à un flasque multifonction (3, 4) et, à ce niveau, à une extrémité supérieure relevée constituée par une nervure transversale.

28. Suspension avant de cabine suivant la revendication 25, **caractérisée en ce que** chaque butée (99, 100) constituant une partie du dispositif de limitation du débattement est constituée d'une plaqùe de butée interchangeable, fixée, le cas échéant en flexion élastique ou avec suspension, à une nervure transversale d'un support (103, 104), lui-même solidaire du châssis et fixé de préférence à un flasque multifonction (3, 4).

29. Suspension avant de cabine suivant la revendication 25, **caractérisée en ce que** chacun des deux pieds de butée (97, 98) est en saillie en bas d'un oeil récepteur (106, 107) ménagé à l'extrémité antérieure d'un bras longitudinal (15, 16), dans le trou borgne intérieur duquel est insérée et fixée l'extrémité associée de la barre transversale (17) du stabilisateur (8).

30. Suspension avant de cabine suivant la revendication 25, **caractérisée en ce que** chacun des deux pieds de butée (97, 98) est raidi à l'arrière par une jambe de force (105) en direction du bras longitudinal considéré (15, 16) et constitue une seule pièce avec les bras longitudinaux (15, 16) du stabilisateur en forme de U (8).
